(19) **Europäisches Patentamt / European Patent Office / Office européen des brevets**

(11) **EP 4 459 503 A1**

(12) **EUROPEAN PATENT APPLICATION**
published in accordance with Art. 153(4) EPC

(43) Date of publication:
06.11.2024 Bulletin 2024/45

(21) Application number: 22915010.7

(22) Date of filing: 29.12.2022

(51) International Patent Classification (IPC):
*G06N 3/04* (2023.01)   *G06N 3/08* (2023.01)

(52) Cooperative Patent Classification (CPC):
G06F 18/214; G06N 3/04; G06N 3/0464;
G06N 3/08

(86) International application number:
PCT/CN2022/143207

(87) International publication number:
WO 2023/125760 (06.07.2023 Gazette 2023/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.12.2021 CN 202111662860

(71) Applicant: VIVO MOBILE COMMUNICATION CO.,
LTD.
Dongguan, Guangdong 523863 (CN)

(72) Inventors:
• CHONG, Weiwei
  Dongguan, Guangdong 523863 (CN)
• CHENG, Sihan
  Dongguan, Guangdong 523863 (CN)

(74) Representative: Murgitroyd & Company
165-169 Scotland Street
Glasgow G5 8PL (GB)

(54) **MODEL TRAINING METHOD AND APPARATUS, AND COMMUNICATION DEVICE**

(57)   This application discloses a model training method and apparatus, and a communications device, and pertains to the field of communications technologies. The model training method in embodiments of this application includes: transmitting, by a first network element, a federated model training request message to at least one second network element when performing a federated model training process corresponding to a model training task, where the at least one second network element is a network element participating in the federated model training process, and samples corresponding to training data used by different second network elements for the federated model training process are different but have same sample features; receiving, by the first network element, first information transmitted by the at least one second network element, where the first information includes at least a first training result, and the first training result corresponds to training data used by the second network element for the federated model training process; and performing, by the first network element, model training based on a first model and the first training result reported by the at least one second network element, to obtain a target model and/or a second training result.

FIG. 3

**Description**

**CROSS-REFERENCE TO RELATED APPLICATIONS**

This application claims priority to Chinese Patent Application No. 202111662860.8, filed on December 30, 2021, which is incorporated herein by reference in its entirety.

**TECHNICAL FIELD**

This application pertains to the field of communications technologies, and specifically, relates to a model training method and apparatus, and a communications device.

**BACKGROUND**

With rapid development of artificial intelligence (Artificial Intelligence, AI), the artificial intelligence has been widely used in various fields.
The communications field is used as an example. With introduction of an AI function, there is inevitably a demand for machine learning. For example, for an intelligent network service, a large amount of data generated in different domains, different network elements, or the like is needed for model training, to implement a more accurate service implementation. However, as increasing attention is paid to data security and privacy issues, a problem of data isolation exists between different domains, different network elements, or the like in a network. Therefore, how to implement model training based on data in different domains or different network elements becomes a problem that urgently needs to be resolved currently.

**SUMMARY**

Embodiments of this application provide a model training method and apparatus, and a communications device, to implement model training based on data in different domains or different network elements without data sharing.
According to a first aspect, a model training method is provided, and includes: transmitting, by a first network element, a federated model training request message to at least one second network element when performing a federated model training process corresponding to a model training task, where the at least one second network element is a network element participating in the federated model training process, and samples corresponding to training data used by different second network elements for the federated model training process are different but have same sample features; receiving, by the first network element, first information transmitted by the at least one second network element, where the first information includes at least a first training result, and the first training result corresponds to training data used by the second network element for the federated model training process; and performing, by the first network element, model training based on a first model and the first training result reported by the at least one second network element, to obtain a target model and/or a second training result.
According to a second aspect, a model training method is provided, and the method includes: receiving, by a second network element, a federated model training request message transmitted by a first network element, where the federated model training request message is used to request the second network element to participate in a federated model training process corresponding to a model training task; performing, by the second network element, model training based on the federated model training request message to obtain a first training result; and transmitting, by the second network element, first information to the first network element, where the first information includes at least the first training result, where the first training result corresponds to training data used by the second network element for the federated model training process, a sample used by the second network element for the federated model training and a sample used by a fifth network element for the federated model training are different but have same sample features, and the fifth network element is a network element, other than the second network element, among a plurality of network elements participating in the federated model training process.
According to a third aspect, a model training method is provided, and the method includes: receiving, by a fourth network element, related information of a target model that is transmitted by a first network element, where the related information of the target model is used to represent at least that the target model is a horizontal federated model.
According to a fourth aspect, a model training apparatus is provided, and includes: a first transmitting module, configured to transmit a federated model training request message to at least one second network element in a case that a federated model training process corresponding to a model training task is performed, where the at least one second network element is a network element participating in the federated model training process, and samples corresponding to training data used by different second network elements for the federated model training process are different but have same sample features; a first receiving module, configured to receive first information transmitted by the at least one second network element, where the first information includes at least a first training result, and the first training result corresponds to training data used by the second network element for the federated model training process; and a first model training module, configured to perform model training based on a first model and the first training result reported by the at least one second network element, to obtain a target model and/or a second training result.

According to a fifth aspect, a model training apparatus is provided, and includes: a second receiving module, configured to receive, for a second network element, a federated model training request message transmitted by a first network element, where the federated model training request message is used to request the second network element to participate in a federated model training process corresponding to a model training task; a second model training module, configured to perform model training based on the federated model training request message to obtain a first training result; and a second transmitting module, configured to transmit first information to the first network element, where the first information includes at least the first training result, where the first training result corresponds to training data used by the second network element for the federated model training process, a sample used by the second network element for the federated model training and a sample used by a fifth network element for the federated model training are different but have same sample features, and the fifth network element is a network element, other than the second network element, among a plurality of network elements participating in the federated model training process.

According to a sixth aspect, a model training apparatus is provided, and includes: a third receiving module, configured to receive related information of a target model that is transmitted by a first network element, where the related information of the target model is used to represent at least that the target model is a horizontal federated model.

According to a seventh aspect, a communications device is provided, and the communications device includes a processor and a memory, where the memory stores a program or instructions executable on the processor, and when the program or instructions are executed by the processor, the steps of the method according to the first aspect, the second aspect, or the third aspect are implemented.

According to an eighth aspect, a communications device is provided, including a processor and a communications interface, where the communications interface is coupled to the processor, and the processor is configured to run a program or instructions to implement the steps of the method according to the first aspect, or implement the steps of the method according to the second aspect, or implement the steps of the method according to the third aspect.

According to a ninth aspect, a model training system is provided, and includes a first network element, a second network element, and a third network element, where the first network element may be configured to perform the steps of the model training method according to the first aspect, the second network element may be configured to perform the steps of the model training method according to the second aspect, and the third network element may be configured to perform the steps of the model training method according to the third aspect.

According to a tenth aspect, a readable storage medium is provided, where the readable storage medium stores a program or instructions, and when the program or instructions are executed by a processor, the steps of the method according to the first aspect are implemented, or the steps of the method according to the second aspect are implemented, or the steps of the method according to the third aspect are implemented.

According to an eleventh aspect, a chip is provided, where the chip includes a processor and a communications interface, the communications interface is coupled to the processor, and the processor is configured to run a program or instructions to implement the steps of the method according to the first aspect, or implement the steps of the method according to the second aspect, or implement the steps of the method according to the third aspect.

According to a twelfth aspect, a computer program or program product is provided, where the computer program or program product is stored in a storage medium, and the computer program or program product is executed by at least one processor to implement the steps of the method according to the first aspect, or implement the steps of the method according to the second aspect, or implement the steps of the method according to the third aspect.

In embodiments of this application, a first network element implements local distributed model training through horizontal federated model training by combining second network elements. This can ensure data privacy and data security in the second network elements and can further ensure model training effect without sharing data in the second network elements on a communications network.

## BRIEF DESCRIPTION OF DRAWINGS

FIG. 1 is a schematic structural diagram of a wireless communications system according to an example embodiment of this application;

FIG. 2 is a schematic structural diagram of a model training system according to an example embodiment of this application;

FIG. 3 is a first schematic flowchart of a model training method according to an embodiment of this application;

FIG. 4 is a second schematic flowchart of a model training method according to an embodiment of this application;

FIG. 5 is a third schematic flowchart of a model training method according to an embodiment of this application;

FIG. 6a is a first schematic diagram of an interaction process of a model training method according to an embodiment of this application;

Fig. 6b is a second schematic diagram of an interaction process of a model training method according to an embodiment of this application;

FIG. 7 is a fourth schematic flowchart of a model training method according to an embodiment of this application;

FIG. 8 is a fifth schematic flowchart of a model training method according to an embodiment of this application;

FIG. 9 is a first schematic structural diagram of a model training apparatus according to an embodiment of this application;

FIG. 10 is a second schematic structural diagram of a model training apparatus according to an embodiment of this application;

FIG. 11 is a third schematic structural diagram of a model training apparatus according to an embodiment of this application;

FIG. 12 is a schematic structural diagram of a communications device according to an example embodiment of this application;

FIG. 13 is a schematic structural diagram of a terminal according to an example embodiment of this application;

FIG. 14 is a first schematic structural diagram of a network-side device according to an embodiment of this application; and

FIG. 15 is a second schematic structural diagram of a network-side device according to an embodiment of this application.

## DESCRIPTION OF EMBODIMENTS

The following clearly describes technical solutions in embodiments of this application with reference to accompanying drawings in embodiments of this application. Clearly, the described embodiments are some but not all of embodiments of this application. All other embodiments obtained by a person of ordinary skill in the art based on embodiments of this application shall fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances, so that embodiments of this application can be implemented in an order other than the order illustrated or described herein. In addition, the objects distinguished by "first" and "second" usually belong to one category, and the number of objects is not limited. For example, there may be one or more first objects. In addition, in this specification and the claims, "and/or" represents at least one of connected objects, and the character "/" typically represents an "or" relationship between the associated objects.

It should be noted that technologies described in embodiments of this application are not limited to a long term evolution (Long Term Evolution, LTE)/LTE-advanced (LTE-Advanced, LTE-A) system, and may be further used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in embodiments of this application are usually used interchangeably, and the technologies described herein may be used in the aforementioned systems and radio technologies, and may also be used in other systems and radio technologies. In the following descriptions, a new radio (New Radio, NR) system is described for an illustration purpose, and NR terms are used in most of the following descriptions, but these technologies may also be applied to systems other than an NR system, for example, a 6th generation (6th Generation, 6G) communications system.

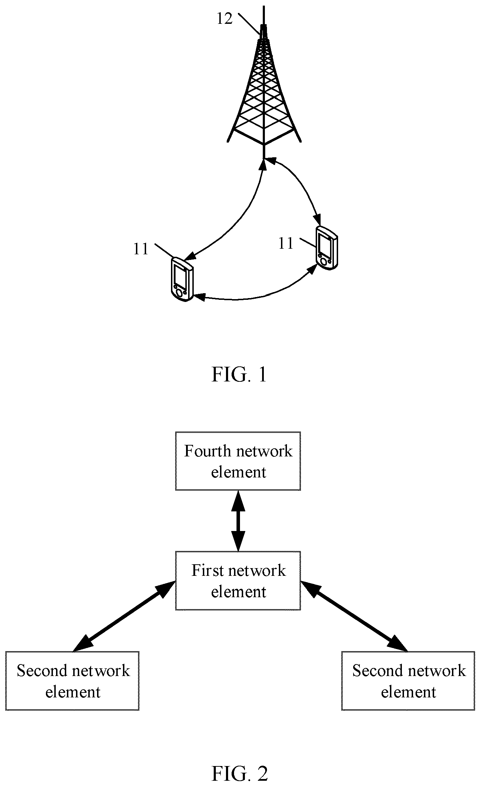

FIG. 1 is a block diagram of a wireless communications system to which embodiments of this application are applicable. The wireless communications system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart household (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, or the like), a smart wristband, smart clothing, or the like. It should be noted that a specific type of the terminal 11 is not limited in embodiments of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a wireless fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. Provided that the same technical effect is achieved, the base station is not limited to a specific technical term. It should be noted that the base station in the NR system is used only as an example for description in embodiments of this application, but a specific type of the base station is not limited. The following describes in detail technical solutions provided in embodiments of this application with reference to accompanying drawings and by using some embodiments and application scenarios thereof.

On the basis of the wireless communications system, as shown in FIG. 2, embodiments of this application further provide a schematic structural diagram of a model training system (which may also be referred to as a horizontal federated learning system or a horizontal federated model training system). The model training system may include a first network element, a second network element, and a fourth network element.

As a coordinator (coordinator) in the model training system, the first network element may be a network element or a device capable of providing a machine learning function on a communications network, for example, a network element or a device specially used for providing an intelligent network service, such as a network data analytics function (Network Data Analytics Function, NWDAF), a management data analytics service (management data analytics service, MDAS), or a management data analytics function (management data analytics function, MDAF). Alternatively, the first network element may be a network element or a device that provides another communication-related service (for example, a mobility management (Mobility Management, MM) service or a session management (Session Management, SM) service) and that also has an intelligent functions, for example, an access and mobility management function (Access and Mobility Management Function, AMF), a session management function (Session Management Function, SMF), or an application function (application function, AF). The AF may be an AF deployed by a communications operator or a third-party AF. In this application, the first network element can further accept a model training application initiated by another network element (for example, the fourth network element) or device.

As a training entity in the model training system, the second network element may be a network element or a device that has local data but does not want to share data, and the network element or the device has a local machine learning capability. In this case, the second network element may be but is not limited to an AI function network element in a radio access network (Radio Access Network, RAN) domain, an AI function network element in a core network (Core Network, CN) domain, a third-party AI application, an AI client (client) on a terminal (User Equipment, UE), a local communications service device, and the like. It should be noted that only two second network elements are shown in FIG. 2 for ease of understanding, but there may be one or more second network elements in practice.

As a model consumer in the model training system, the fourth network element may be a network element or a device, in a wireless communications system, that needs to consume a model, for example, a third-party AI application, UE, or a network-side device. It can be understood that the model training system may include the fourth network element (for example, the federated model training process may be triggered by the fourth network element), as shown in FIG. 2, or may not include the fourth network element (for example, the federated model training process may be triggered by the first network element according to a requirement of the first network element), or the like. To be specific, the model training system may include more or fewer network elements or devices than shown in FIG. 2. This is not limited herein.

The following describes in detail technical solutions provided in embodiments of this application with reference to accompanying drawings and by using some embodiments and application scenarios thereof.

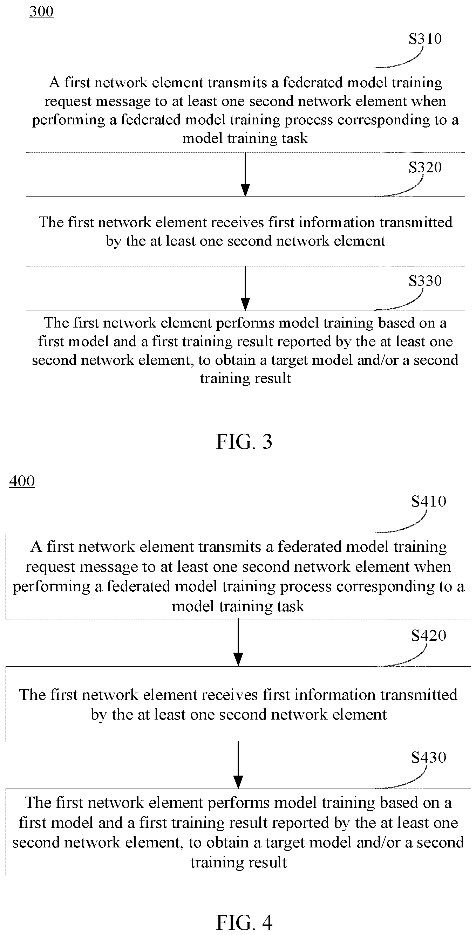

FIG. 3 is a schematic flowchart of a model training method 300 according to an example embodiment of this application. The method 300 may be performed by a first network element (for example, a terminal or a network-side device) but is not limited thereto, and may be specifically performed by hardware and/or software installed in the first network element. In this embodiment, the method 300 may include at least the following steps.

S310: The first network element transmits a federated model training request message to at least one second network element when performing a federated model training process corresponding to a model training task.

The model training task may be an AI model training task corresponding to data analysis, an AI model training task corresponding to communications robustness learning, an AI model training task for performing model training for a moving trajectory of UE, or the like. This is not limited herein.

The federated model training process may be triggered by the first network element based on a model training task required by the first network element, or may be triggered by a fourth network element. For example, the fourth network element may transmit, to the first network element according to a requirement of the fourth network element, a model request message corresponding to the model training task, to trigger the federated model training process.

It should be noted that the federated model training process may also be understood as a horizontal federated learning process, and is essentially a combination of samples and is applicable to a scenario in which participants have a same business type but different target customers, to be specific, a scenario in which features (namely, sample features) greatly overlap and users (namely, samples) less overlap, for example, a same service (for example, an MM service or an SM service, namely, a same sample feature) with different users or different user groups (for example, UEs or UE groups, namely, different samples) on different base station devices in a RAN domain. Based on this, in this application, same sample features (which may also be referred to as data features) of different samples of a model training participant (namely, the second network element) are combined to increase the number of sample dimensions corresponding to training data and obtain a better model through training.

In this case, the federated model training request message transmitted by the first network element to each second network element is used to request the at least one second network element to participate in the federated model training process (to be specific, the at least one second network element is a network element participating in the federated model training process, and samples used by different second network elements for the federated model training are different but have same sample features), for example, perform local distributed model training. Therefore, local distributed model training can be implemented by combining the second network elements, without sharing raw data (or training data) in the second network elements, to ensure model training effect while ensuring data privacy and data security in the second network elements.

Certainly, there may be many manners of determining the second network element participating in the federated model training process. In an implementation, the second network element may be a network element that is obtained by the first network element from a network repository function (Network Repository Function, NRF) or a unified data management (Unified Data Management, UDM) entity based on the model training task and that is able to support the federated model training process. For example, the first network element queries the NRF to obtain an AMF instance (instance(s)) participating in the federated model training process. For another example, the first network element queries the UDM to obtain a UE instance (instance(s)) participating in the federated model training process. This is not limited herein.

S320: The first network element receives first information transmitted by the at least one second network element, where the first information includes at least a first training result.

It can be understood that after receiving the federated model training request message, each second network element may perform model training based on the federated model training request message to obtain the first training result, and transmit the first training result to the first network element by using the first information (to be specific, the first information includes at least the first training result). The performing, by the second network element, model training based on the federated model training request message may be implemented based on an initial model preconfigured locally, or may be implemented based on a local training model that has been trained before the federated model training request is received, or may be implemented based on a first model indicated by the federated model training request message. This is not limited herein.

In addition, the first training result corresponds to training data used by the second network element for the federated model training, and samples corresponding to training data used by different second network elements for the federated model training process are different but have same sample features. For example, training data in a second network element A corresponds to a sample S1, training data in a second network element B corresponds to a sample S2, and training data in a third network element C corresponds to a sample S3. Sample features of the sample S1, the sample S2, and the sample S3 that are used for the federated model training process are the same.

S330: The first network element performs model training based on the first model and the first training result reported by the at least one second network element, to obtain a target model and/or a second training result.

The first model may be an initial model (which may also be referred to as an initialized global model) generated by the first network element for the model training task, or the first model may be an intermediate model obtained by performing, by the first network element, model training/updating on the initial model for one or more times. This is not limited herein.

A process of performing, by the first network element, model training based on the first training result is not limited herein. For example, the first network element may update the first model based on the first training result reported by the at least one second network element. It should be noted that a first training result reported by each second network element corresponds to the first model, to be specific, each second network element trains the first model and reports a first training result obtained through training to the first network element, and then the first network element performs model training/updating on the first model based on the first training results to obtain the target model. It can be understood that one or more federated model training processes may be performed in a case that the first network element obtains the target model through training based on the first model. For example, in a case that the target model has not converged, the target model may be used as the intermediate model (to be specific, used as the first model again) to continue to perform a federated model training process.

In addition, the second training result may include at least gradient information of a loss function of the target model with respect to a parameter of the target model. The loss function of the target model may be preconfigured by the first network element for the target model. In addition, because the target model may be only a non-convergent intermediate model, target models corresponding to different degrees of training (or times of training) may correspond to different second training results. This is not limited herein.

In this embodiment, the first network element implements local distributed model training through horizontal federated learning by combining the second network elements. This can ensure data privacy and data security in the second network elements and can further ensure model training effect without sharing data in the second network elements on a communications network.

FIG. 4 is a schematic flowchart of a model training method 400 according to an example embodiment of this application. The method 400 may be performed by a first network element (for example, a terminal or a network-side device) but is not limited thereto, and may be specifically performed by hardware and/or software installed in the first network element. In this embodiment, the method 400 may include at least the following steps.

S410: The first network element transmits a federated model training request message to at least one second network element when performing a federated model training process corresponding to a model training task.

The at least one second network element is a network element participating in the federated model training process, and samples corresponding to training data used by different second network elements for the federated model training process are different but have same sample features.

It can be understood that for an implementation process of S410, reference may be made to related descriptions in the method embodiment 300. In addition, in an implementation, the federated model training request message may include at least one of the following (11) to (19).

(11) Model instance identification information (model instance ID). The model instance identification information is used to uniquely identify a first model, an intermediate model, or a target model generated in the first network element (in other words, the model instance identification information corresponds to the first model, the intermediate model, or the target model), to facilitate identification, calling, consumption, and the like of the first model, the intermediate model, or the target model.

In this embodiment, the model instance identification information may be allocated by the first network element. For example, in a case of determining to perform the federated model training process corresponding to the model training task, the first network element correspondingly allocates, to the model training task, model instance identification information for indicating a model entity, for example, the first model, the intermediate model, or the target model, that is obtained through training by using the federated model training process.

Based on this, the model instance identification information corresponds to or includes at least one of the following (111) to (114).

(111) Related information of the first network element, for example, identification information (Identity, ID), fully qualified domain name (Fully Qualified Domain Name, FQDN) information, name information, or address information of the first network element.

(112) First time, used to indicate that the model training task is performed based on training data generated within the first time.

Optionally, the first time and subsequent second time and third time each may be a time period or a time point. For example, the first time may be October 11, 2021.

In addition, the first time, the second time, and the third time may be relative time or absolute time. This is not limited herein.

(113) Second time, used to indicate completion time of the federated model training process.

(114) Related information of the second network element, for example, name information, FQDN information, identification information, or address information of the second network element.

(12) Type information of the model training task. The type information may include an analytics identifier (analytics ID), a model identifier (model ID), or the like, to indicate a specific machine learning task (namely, model training task) on which model training in the federated model training process is performed.

For example, a character string "analytics ID/model ID=UE mobility" may be used to indicate that model training needs to be performed for a moving trajectory of UE to obtain an AI model for the moving trajectory of the UE. It should be noted that in addition to the character string type, the type information may alternatively be represented in a digital representation form, another coding representation form, or the like. This is not limited herein.

(13) Identification information of the model training task. Similar to the type information of the model training task, the identification information of the model training task may also include an analytics ID, a model ID, or the like, to indicate a specific machine learning task (namely, model training task) on which model training in the federated model training process is performed.

For example, a character string "analytics ID/model ID=UE mobility" may be used to indicate that model training needs to be performed for a moving trajectory of UE to obtain an AI model for the moving trajectory of the UE. It should be noted that in addition to the character string type, the identification information may alternatively be represented in a digital representation form, another coding representation form, or the like. This is not limited herein.

It can be understood that to avoid information redundancy, the federated model training request message may include any one of the identification information of the model training task and the type information of the model training task.

(14) First indication information, used to indicate that the federated model training process is a horizontal federated learning process. The first indication information may be an implicit or explicit indication. For example, in an implicit indication, the second network element may determine that the federated model training process is a horizontal federated learning process based on information that is included in the federated model training request message and that indicates that a plurality of network elements participate in the federated model training process. This is not limited herein.

(15) Related information of a first filter (filter), which may also be understood as filter information (filter information) of model training. The related information of the first filter is used to define at least one of a target object (for example, target UE (target UE(s))), target time (for example, a target time period (target time period)), and a target area (for example, a target area of interest (target area of interest, target AOI)) that correspond to the model training task, so that each second network element can capture appropriate training data based on the related information of the first filter to perform local model training.

For example, the target object may be an object served by the second network element or an object correspondingly managed by the second network element, and the target area may be a service area of the second network element or an area correspondingly managed by the second network element. This is not limited herein.

(16) Model training configuration information. The model training configuration information is used to align model training methods and/or training parameters for the horizontal federated learning process. To be specific, the model training configuration information is used to indicate a method or a model algorithm used by the second network element to perform local model training, a used local training model, or the like. For example, the second network element may train the local training model based on the model training configuration information.

In an implementation, the model training configuration information is determined by the first network element for the model training task or the federated model training process. Optionally, the model training configuration information may include at least one of the following (161) to (166).

(161) Model structure information. The model structure information is used to indicate a specific type (for example, a neural network, a deep neural network (DNN), a convolutional neural network (CNN), a recurrent neural network (RNN), or linear structure) of a model structure used in the horizontal federal learning training process, so that all training entities use the model structure information for model training.

In addition, for the neural network model structure, the model structure information may further specifically specify neural network layers, neuron nodes, a relationship between input and output at each layer, and the like. Certainly, each second network element may alternatively determine, based on the model structure information, a model structure that needs to be used in the federated model training process. This is not limited herein.

(162) Model hyperparameter information. The model hyperparameter information is an external configuration variable of the target model, is usually used in a model parameter training process, and may be usually directly specified by a practitioner. For example, the model hyperparameter information is a parameter specified before the federal model training process starts. The model hyperparameter information is used to define a higher-layer concept, for example, complexity or a learning capability, of a model.

Optionally, the model hyperparameter information may include an algorithm agreed upon for model training, the number of trees or a depth of a tree, the number of latent factors in matrix decomposition, a learning rate, the number of hidden layers of a deep neural network, the number of clusters in K-means clustering, a loss function corresponding to the target model, a predetermined value (corresponding to the loss function) for determining whether the target model has converged, or the like. This is not limited herein.

It should be noted that in addition to that the first network element specifies the model hyperparameter, the second network element may alternatively autonomously determine the model hyperparameter information. To be specific, if the federated model training request message does not include the model hyperparameter information, each second network element may alternatively autonomously determine the model hyperparameter information.

(163) Type information of training data in the federated model training process. The training data may also be understood as input data and/or output data in the model training process, and is used to recommend, to the second network element, types of input data and/or output data used in the federated model training process. A type of the input data may be a sample feature for training, or the like. This is not limited herein.

For example, in a case that the second network element is two AMFs (an AMF 1 and an AMF 2), the type information of the training data is used to recommend, to the two AMFs, that local training models of the AMFs should be trained by using two types of input data: a UE location (location), AMF load, or the like.

(164) Model training condition information, used to indicate to, the second network element, a condition under which the first network element starts model training (or model updating, calculation, or the like) based on the first training result reported by the second network element.

In an implementation, the model training condition information may include at least any one of the following (a) and (b).

(a) Third time. The third time is used to indicate that model training is to start in a case that waiting time of the first network element waiting for the second network element to feed back the first training result reaches the third time.

For example, it is assumed that five second network elements participate in the federated model training process and in a case that waiting time of the first network element waiting for the five second network elements to feed back first training results reaches the third time, the first network element receives only first training results transmitted by three second network elements. In this case, the first network element may attempt to start to update the first model based on the currently received first training results that are transmitted by the three second network elements.

(b) A first threshold. The first threshold is used to indicate that model training is to start in a case that the number of first training results received by the first network element reaches the first threshold.

For example, it is assumed that five second network elements participate in the federated model training process and the first threshold is 4. In this case, in a case that the number of first training results received by the first network element is 4, the first network element may attempt to start to update the first model based on the currently received four first training results.

For another example, it is assumed that five second network elements participate in the federated model training process and the first threshold is 80%. In this case, in a case that the number of first training results received by the first network element is 4 and reaches 80% (4/5), the first network element may attempt to start to update the first model based on the currently received four first training results.

(165) Model training count information, used to indicate the number of times of local model training that the second network element needs to perform before transmitting the first information to the first network element. To be specific, the model training count information is used to indicate, to the second network element, information about the number of times of local model training that the second network element needs to perform before returning one first training result to the first network element.

It should be noted that the model training count information may further include information about the predicted total number (or total number of times) of training iterations in the federated model training process.

(166) Model training duration information, used to indicate duration of local model training that the second network element needs to perform before transmitting the first information to the first network element. To be specific, the model training duration information is used to indicate, to the second network element, information about available duration in which the second network element is allowed to perform local model training before returning one first training result to the first network element.

It can be understood that the model training count information and the model training duration information in (165) and (166) may be determined by the second network element based on training capability information (for example, information about a computing capability, a data storage capability, or duration required for each training iteration) of each second network element. To be specific, the model training count information and/or the model training duration information may vary for different second network elements.

For example, the model training count is used as an example. The first network element determines the model training count information of the second network element based on the training capability information of the second network element, to ensure that a second network element with a weaker training capability performs training for fewer times and a second network element with a stronger training capability performs training for more times. In this way, all second network elements participating in the federated model training process synchronously return first training results, to be specific, the first network element obtains the first training results reported by all the second network elements almost simultaneously, to perform subsequent model training and update work.

In addition, the training capability information of the second network element may be obtained by the first network element from the NRF. This is not limited herein.

(17) Reporting information of the first training result, used to define a reporting format, a reporting condition, and other information used in a case that each second network element feeds back the first training result.

The reporting format may be understood as model framework information, for example, an expression based on a TensorFlow or Pytorch model framework, or may be understood as a cross-framework model expression (for example, ONNX). Alternatively, the reporting format may be used to indicate the second network element to return at least one of an entire model obtained through local training, all model parameters obtained through local training, or a model parameter/gradient information that changes after local training, or the like.

The reporting condition may include: being triggered by an event and/or being periodically triggered. The being triggered by an event may include any one of (171) to (173).

(171) In a case that the number of rounds (or times) of training performed by the second network element to train a local model reaches a predetermined value, the second network element reports the first training result. The first network element may specify different numbers of rounds of training for different second network elements. In this way, the first network element aligns paces of reporting first training results by all training entities (namely, the second network elements) in a model training iteration process, to ensure consistency between reporting paces of the training entities, prevent a training entity from falling behind, and ensure model training effect.

(172) Before reporting time reaches the longest waiting time (or a feedback deadline), the second network element reports the first training result. It can be understood that the longest waiting time may be understood as the model training duration information. To be specific, the second network element may report the first training result before the reporting time reaches the model training duration information.

(173) In a case that a local model converges (a loss function corresponding to the local model reaches a preset value), the second network element reports the first training result.

The being periodically triggered means that the second network element may periodically report the first training result, for example, report one first training result every 5 minutes.

(18) Related information of each network element participating in the federated model training process, used to indicate, to the second network element, another second network element, the first network element, and/or the like that participate in the federated model training process. Optionally, the related information of each network element may include network element type information, identification information, address information, or the like of each second network element, or network element type information, identification information, address information, or the like of the first network element.

(19) Related information of the first model, where the related information of the first model is used by each second network element to perform local model training. This can prevent the second network element from starting a model training process from zero, and therefore improve efficiency of model training.

Optionally, the related information of the first model may be model identification information, model structure information, model parameter information, or the like of the first model. This is not limited herein. In addition, in the federated model training process, the related information of the first model during the 1st federated model training is related information of the initial model, and the related information of the first model during the subsequent 2nd federated model training, 3rd federated model training, and so on is related information of the intermediate model.

It can be understood that information, in (11) to (19), that is specifically included in the federated model training request message may be agreed upon in a protocol, configured by a higher layer, or configured by a network side. This is not limited herein. In addition, in a case that a plurality of second network elements participate in the federated model training process, content in the federated model training request message may be partially the same or partially different for the second network elements. This is not limited herein.

Further, in addition to the foregoing implementations, in this embodiment, in a case that the first network element determines whether to perform a federated model training process corresponding to a model training task, the federated model training process may be triggered by the first network element or a fourth network element; or whether a first condition is met may first need to be determined, and then whether the federated model training process is to be performed is determined based on whether the first condition is met. For example, when it is determined that the first condition is met, the first network element determines to perform the federated model training process corresponding to the model training task. Certainly, the first condition may also be understood as a factor, a trigger condition, or the like based on which the first network element determines that the federated model training process needs to be performed.

Based on this, the first condition may include at least one of the following (21) to (23).

(21) That all or some of training data corresponding to the model training task is not stored in the first network element or is not able to be obtained. For example, some or all of training data of training entities (namely, the second network elements) may be absent in the first network element due to data security or data privacy issues. Therefore, the first network element needs to use the federated model training process to combine the second network elements for local distributed model training.

(22) That the at least one second network element is able to provide all or some of the training data corresponding to the model training task.

(23) That training data corresponding to the model training task and used by different second network elements has different sample with same sample features. For example, to analyze a behavior trajectory regularity of all users in an area A (correspondingly managed by a plurality of base stations), a trajectory model for the users in the area A needs to be obtained, and training data required for training the trajectory model may be location data (for example, sample features) generated for different users (namely, samples) under different base stations.

It can be understood that one of (21) to (23) that is included in the first condition may be agreed upon in a protocol, configured by a higher layer, or configured by a network side. This is not limited herein.

S420: The first network element receives first information transmitted by the at least one second network element.

The first information includes at least a first training result. The first training result corresponds to training data used by the second network element for the federated model training process. To be specific, the first training result is obtained based on the training data in the second network elements.

It can be understood that for an implementation process of S420, reference may be made to related descriptions in the method embodiment 300. In addition, in a possible implementation, after receiving the federated model training request message transmitted by the first network element, each second network element may perform model training to obtain a local training model, and then perform calculation based on the local training model to generate the first training result and transmit the first training result to the first network element.

For example, if the second network element performs model training based on the federated model training request message to obtain the local training model, a process of obtaining the first training result by each second network element may include the following (31) to (35). Content is as follows:

(31) The second network element determines, based on the first indication information, that a federated model training process needs to be performed. It can be understood that the first indication information may be obtained from the federated model training request message transmitted by the first network element, or the first indication information may be directly obtained from the first network element. This is not limited herein.

(32) The second network element determines, based on the type information of the model training task or the identification information (for example, the analytics ID or the model ID) of the model training task, a model training task corresponding to the federated model training process. For example, the second network element may determine, based on a character string "analytics ID/model ID=service experience", that model training needs to be performed for an application (application) of a user to obtain a service experience model.

(33) The second network element obtains training data based on the model training task and the related information of the first filter.

For example, the second network element may determine, based on the model training task and the related information of the first filter, to capture location data of all UEs in a corresponding serving cell 1 of the second network element within a time period of 07:00 to 09:00 every Monday, and use the location data as training data. A type of data to be captured may be internally configured in a training entity or determined based on the type information of the training data that is included in the federated model training request message. This is not limited herein.

(34) The second network element determines, based on the model training configuration information and/or the related information of the first model, a local training model and a model training mode for training the local training model.

For example, the second network element may determine, based on the model training configuration information, a training mode, for example, a model structure, an algorithm, or a hyperparameter, for the local training model. For another example, the second network element determines, based on the related information of the first model, that the first model is the local training model.

Certainly, in addition to the manner of determining the local training model based on the related information of the first model, the local training model may alternatively be a model preconfigured in the second network element, or a model obtained by the second network element from another network element, or a model obtained by the second network element through local model training. This is not limited herein.

(35) The second network element trains the local training model based on the model training mode, and performs calculation on the training data based on a trained local training model to obtain the first training result.

For example, assuming that the second network element is a base station, an i-th base station obtains a cell model $L_i^t$ after t rounds of model training, and reports the model $L_i^t$ to the first network element as the first training result. Similarly, an (i+1)th base station obtains a cell model $L_{i+1}^t$ after t rounds of model training, and reports the model $L_{i+1}^t$ to the first network element as the first training result.

Certainly, it should be noted that in addition to a model (to be specific, model information of a second model) obtained by the second network element through training, the first training result may alternatively be first gradient information obtained by the second network element through training based on the local training model, and the first gradient information is a calculated gradient value of a loss function of the second model, obtained by the second network element through training, with respect to a parameter of the second model.

Alternatively, in an implementation, the first information may further include model instance identification information, and the model instance identification information is used by the first network element to perform model association. For example, the first network element associates, based on the model instance identification information, first training results that are obtained for a same first model and that are reported by different second network elements, to perform model training/updating on the first model.

It can be understood that the model instance identification information reported by the second network element may be determined based on the model instance identification information in the federated model training request message.

S430: The first network element performs model training based on the first model and the first training result reported by the at least one second network element, to obtain a target model and/or a second training result.

It can be understood that for an implementation process of S430, reference may be made to related descriptions in the method embodiment 300. In addition, in a possible implementation, a process of performing, by the first network element, model training based on the first model and the first training result reported by the at least one second network element to obtain the target model and/or the second training result may vary based on different model training condition information. The following describes a model training process for the first network element with reference to a manner 1 and a manner 2. Content is as follows:

Manner 1: It is assumed that all second network elements have reported first training results, waiting time of the first network element waiting for the second network element to feed back the first training result reaches the third time, or the number of first training results fed back by the second network element and received by the first network element reaches the first threshold. In this case, the first network element updates the first model based on the first training results reported by the second network elements.

For example, in a case that the first training result is the first gradient information corresponding to the second model, the first network element performs weighted averaging on the received first gradient information to obtain an average model gradient calculation result, and updates the first model by using the average model gradient calculation result.

For another example, in a case that the first training result is the model information of the second model, it is assumed that model information of the second model that is received by the first network element and that is reported by an i-th second network element is $L_i^t$ and model information of the second model that is reported by an (i+1)th second network element is $L_{i+1}^t$. In this case, the first network element may update the first model based on the following formula (1), $L_i^t$, and $L_{i+1}^t$.

$$G^{t+1} = G^t + \lambda \sum_{i=1}^{m} (L_i^t - G^t) \qquad (1)$$

$G^{t+1}$ represents an updated target model, and A represents a learning rate.

Manner 2: Each time the first network element receives a first training result reported by a second network element, the first network element may update the first model based on the first training result.

For example, assuming that a first training result that is received by the first network element and that is reported by an i-th second network element is $L_i^t$, the first network element may update the first model based on a formula (2) and the first training result $L_i^t$.

$$\dot{G}^{t+1} = (1-\alpha) G^t + \alpha G^{t+1} \qquad (2)$$

$G^{t+1}$ represents an updated target model. $\alpha$ is a hybrid hyperparameter, and $\alpha$ follows an attenuation policy based on a difference between parameter adjustment completion time $t$ of the first model and a timestamp $\tau$ at which the first training result is received. $\alpha_t = \alpha * s(t - \tau)$, where $s$ is an attenuation coefficient.

It can be understood that after the first network element obtains the target model through training, the second training result may be a gradient value of a loss function of the target model with respect to a parameter of the target model. To be specific, the second training result includes at least second gradient information of the loss function of the target model with respect to the parameter of the target model.

Certainly, in a case that a calculation result of the loss function of the target model does not meet a predetermined requirement (for example, a precision value of the loss function does not reach a predetermined value), the first network element may perform a federated model training process again, until a calculation result of a loss function of a target model trained by the first network element through training meets the predetermined requirement. It can be understood that in a case that the calculation result of the loss function of the target model does not meet the predetermined requirement, the target model may be understood as an intermediate model. To be specific, the second training result is a gradient value of a loss function of the intermediate model with respect to a current parameter of the intermediate model.

In an implementation, in a case that the federated model training process is to be performed again, the first network element may transmit second information to the at least one second network element again, where the second information includes at least the second training result, so that each second network element trains a local training model again based on the second training result, to re-obtain the first training result.

For example, the first network element delivers a same second training result to different second network elements. For example, the first network element transmits, to a RAN 1 (namely, the second network element) and a RAN 2, the second gradient information of the loss function of the target model with respect to the current parameter of the target model. Correspondingly, after receiving the second training result, the RAN 1 and the RAN 2 each may adjust a local model parameter based on the second training result to obtain a parameter-adjusted local model, and then re-obtain the first training result based on the parameter-adjusted local model.

In another implementation, in a case that the first network element is to perform the federated model training process again, and that different training entities have different data, or different training entities may have different data for model learning, or a training entity is no longer suitable for the federated model training process due to disconnection, an excessively high delay, or other reasons, the training entity may be replaced with another training entity in a next iteration. To be specific, training entities participating in the federated model training process may be at least partially different from those participating in a previous federated model training process.

To be specific, in performing a next round of federated model training, the first network element may re-determine a network element, for example, at least one third network element, to participate in a federated model training process, and after determining the at least one third network element to participate in this round of federated model training, the first network element transmits second information to the at least one third network element. The second information includes at least the second training result, and the second training result is used by the third network element to perform local model training to obtain a third training result.

It can be understood that for selection of the third network element, reference may be made to related descriptions of the foregoing process of selecting the second network element, and for an implementation of the third training result, reference may be made to related descriptions of the first training result. To avoid repetition, details are not described herein again.

It should be noted that the at least one third network element and the at least one second network element may be at least partially the same or different. However, because the third network element participates in the federated model training process for the first time, in addition to the information of the target model or the second gradient information, the second information transmitted to the third network element may further include some or all of information in the federated model training request other than the related information of the first model, to ensure that the third network element can successfully complete local model training.

Therefore, in a scenario in which the first network element transmits the second information to the second network element, or in a scenario in which the third network element is the same as the second network element and the first network element transmits the second information to the third network element, the first network element may transmit the second information in an incremental transmission mode or a full transmission mode.

The incremental transmission mode means: for each second network element, transmitting specified information to the second network element, where the specified information belongs to the second information and is different from information included in the federated model training request message.

For example, if a training entity has not changed compared with that in a previous iteration process, the second information may include information of the updated target model and/or the second training result, but does not include other information repeated in the federated model training request message. To be specific, the first network element needs to deliver only the information of the updated target model and/or the second training result without repeatedly delivering the other information in the federated model training request message. This can avoid a waste of resources or poor transmission reliability caused by an excessively large data size.

The full transmission mode means: for each second network element, transmitting all information in the second information to the second network element.

For example, if a training entity has changed compared with that in a previous iteration process, the second information includes the information of the updated target model and/or the second training result, and in addition, the other information in the federated model training request message may be further delivered to a newly selected training entity. For example, the other information is the model instance identification information, the reporting information of the first training result, the model training configuration information, and the related information of each network element participating in the federated model training process.

To be specific, in addition to the second training result, the second information may further include at least one of the following (51) to (55).

(51) Model instance identification information, used by the second network element to perform model association.

(52) Information of the target model, used to indicate the second network element or the third network element to perform local model training based on the target model. Optionally, the information of the target model may include model structure information, model hyperparameter information, or the like. This is not limited herein.

(53) Reporting information of the first training result.

(54) Related information of each network element participating in the federated model training process.

(55) Model training configuration information corresponding to the target model.

For descriptions of (51) to (55), refer to related descriptions of the federated model training request message. To avoid repetition, this is not limited herein.

It should be noted that in the federated model training process, the first network element may determine, based on whether the target model has converged, whether to repeat the federated model training process, until a target model obtained in the first network element converges. That the target model converges means that a precision value of a loss function corresponding to the target model meets a predetermined requirement or reaches a predetermined value.

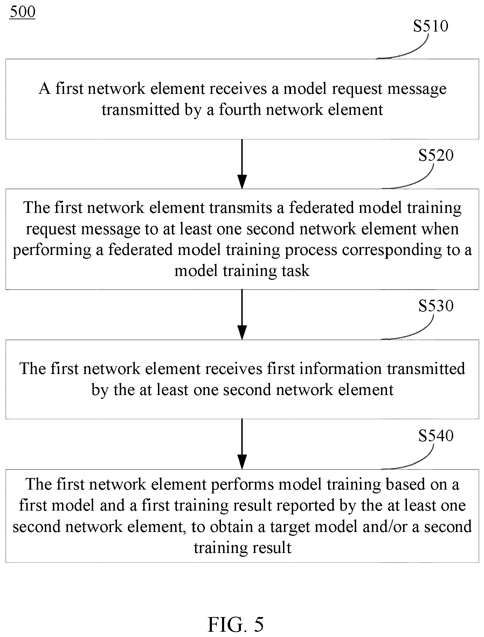

FIG. 5 is a schematic flowchart of a model training method 500 according to an example embodiment of this application. The method 500 may be performed by a first network element (for example, a terminal or a network-side device) but is not limited thereto, and may be specifically performed by hardware and/or software installed in the first network element. In this embodiment, the method 500 may include at least the following steps.

S510: The first network element receives a model request message transmitted by a fourth network element.

The model request message includes at least one of the following (61) to (64).

(61) Type information of a model training task.

(62) Identification information of the model training task.

For the type information of the model training task and the identification information of the model training task, refer to the foregoing related descriptions of the type information of the model training task and the identification information of the model training task in the federated model training request message. To avoid repetition, details are not described herein again.

(63) Related information of a second filter, used to define at least one of a target object, target time, and a target area that correspond to the model training task.

(64) Model feedback-related information, where the model feedback-related information may include at least one of a model feedback format and a feedback condition.

The model feedback format may be understood as model framework information, for example, an expression based on a TensorFlow or Pytorch model framework, or may be understood as a cross-framework model expression (for example, ONNX).

The feedback condition may include: being triggered by an event and/or being periodically triggered. The being triggered by an event includes at least one of (641) to (643).

(641) In a case that the number of rounds (or times) of training performed by the first network element to train a target model reaches a predetermined value, the first network element feeds back the target model.

(642) Before training time reaches the longest waiting time, the first network element feeds back the target model.

(643) In a case that the target model converges (a loss function corresponding to the target model reaches a preset value), the first network element feeds back the target model.

The being periodically triggered means that the first network element may periodically feed back the target model to the fourth network element, for example, feed back one target model every 5 minutes.

Certainly, in addition to the foregoing feedback conditions, the model feedback information may alternatively indicate the first network element to feed back the target model through one-time feedback, a plurality of continuous updates and feedbacks, a feedback deadline, periodic feedback, or the like. This is not limited herein.

It should be noted that the federated model training request message transmitted by the first network element to each second network element may be determined by the first network element based on the model request message. For example, the type information of the model training task and the identification information of the model training task in the federated model training request message may be the same as the type information of the model training task and the identification information of the model training task in the model request message. For another example, the related information of the first filter in the federated model training request message may be the same as or different from the related information of the second filter in the model request message. This is not limited herein.

S520: The first network element transmits a federated model training request message to at least one second network element when performing a federated model training process corresponding to a model training task.

The at least one second network element is a network element participating in the federated model training process, and samples corresponding to training data used by different second network elements for the federated model training process are different but have same sample features.

S530: The first network element receives first information transmitted by the at least one second network element, where the first information includes at least a first training result, and the first training result corresponds to training data used by the second network element for the federated model training process.

S540: The first network element performs model training based on a first model and the first training result reported by the at least one second network element, to obtain a target model and/or a second training result.

It can be understood that for implementation processes of S520 to S540, reference may be made to related descriptions in the method embodiment 300 and/or the method embodiment 400. To avoid repetition, details are not described herein again.

Certainly, in an implementation, in a case that a calculation result of a loss function of the target model meets a predetermined requirement (for example, a precision value of the loss function reaches a predetermined value, that is, the target model converges), the first network element may transmit related information of the target model to the fourth network element for the fourth network element to perform a corresponding task based on the target model.

The related information of the target model includes at least one of the following (71) to (74).

(71) Model instance identification information. Refer to the foregoing descriptions of the model instance identification information. To avoid repetition, details are not described herein again.

(72) Information of the target model, where the information of the target model includes at least one of the following (721) to (726).

(721) Model structure information. The model structure information is used to indicate a specific type (for example, a neural network, a deep neural network (DNN), a convolutional neural network (CNN), a recurrent neural network (RNN), or linear structure) of a model structure of the target model. In addition, for the neural network model structure, the model structure information may further specifically specify neural network layers, neuron nodes, a relationship between input and output at each layer, and the like.

(722) Model parameter information. The model parameter information is an internal configuration variable of the target model, is used to define a function of the target model, and may be obtained through data estimation or model training. For example, the model parameter may include a weight in an artificial neural network, a support vector in a support vector machine, or a coefficient in linear regression or logistic regression.

(723) Model algorithm information. For example, the model algorithm information may include but is not limited to a decision-making tree, a Bayes classifier, k-nearest neighbors, and a support vector machine.

(724) Model hyperparameter information. The model hyperparameter information is an external configuration variable of the target model, is usually used in a model parameter training process, and may be usually directly specified by a practitioner. For example, the model hyperparameter information may include a learning rate for training a neural network, C and sigma hyperparameters of a support vector machine, or a parameter k in a k neighborhood.

(725) Type information of model input data.

(726) Type information of model output data.

(73) Second indication information, used to indicate that the target model is a horizontal federated learning model or indicate that the model is generated through a horizontal federated learning process. Optionally, the second indication information may be an explicit indication or implicit indication. For example, in a case that the second indication information is implicit indication information, implicit indication may be implemented by the model instance identification information or related information of the second network element.

(74) Related information of the second network element and/or a third network element, for example, network element type information, identification information, FQDN information, or address information of the second network element and the third network element.

In this embodiment, in a case that the first network element receives the model training request transmitted by the fourth network element, the federated model training process is triggered, and then all second network elements are combined to perform local distributed model training to obtain the target model. This can meet a model training requirement in the fourth network element while ensuring security and privacy of data in the second network element.

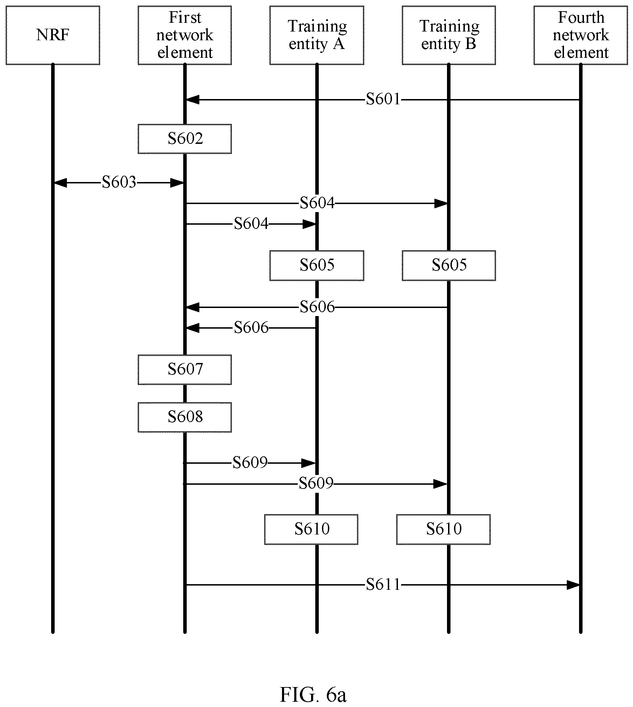

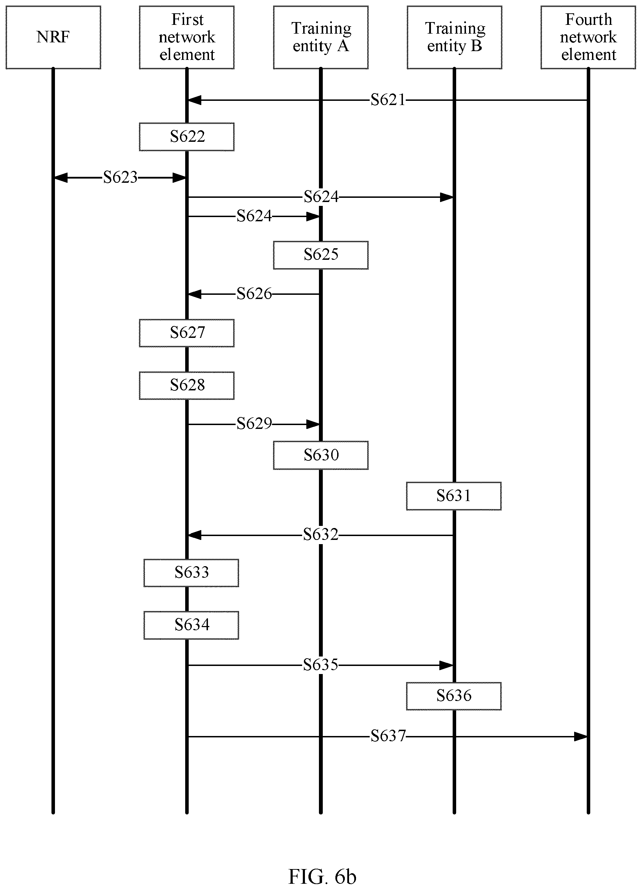

Based on the descriptions of the method embodiments 200 to 500, the model training method provided in this application is further described below with reference to FIG. 6a and FIG. 6b by using an example in which the federated model training process is triggered by the fourth network element. Content is as follows. It is assumed that two second network elements participate in the federated model training process.

Example 1

As shown in FIG. 6a, a model training process provided in Example 1 is as follows.

S601: A fourth network element transmits a model request message to a first network element.

S602: The first network element determines, based on the model request message, to perform a federated model training process.

S603: The first network element obtains, from an NRF, two second network elements, for example, a training entity A and a training entity B, that are able to participate in the federated model training process.

S604: The first network element transmits a federated model training request message to the training entity A and the training entity B.

S605: After receiving the federated model training request message, the training entity A trains a local training model based on the federated model training request message, and then obtains a first training result based on a trained local training model.

Correspondingly, after receiving the federated model training request message, the training entity B trains a local training model based on the federated model training request message, and then obtains a first training result based on a trained local training model.

S606: The training entity A and the training entity B separately report first information to the first network element, where the first information includes at least the first training result.

S607: The first network element performs model training based on received first training results that are reported by the training entity A and the training entity B, to obtain a target model and/or a second training result.

S608: The first network element determines whether a calculation result of a loss function corresponding to the target model meets a predetermined requirement.

S609: In a case that the calculation result of the loss function of the target model does not meet the predetermined requirement, the first network element transmits second information to the training entity A and the training entity B, where the second information includes at least the second training result.

S610: The training entity A and the training entity B perform local model training again based on the received second training result, and re-obtain the first training result.

It can be understood that the first network element, the training entity A, and the training entity B repeatedly perform S605 to S610, until a calculation result of a loss function corresponding to a target model meets the predetermined requirement, that is, the target model converges, and then stop the federated model training process.

S611: In a case that the calculation result of the loss function of the target model meets the predetermined requirement, the first network element transmits related information of the target model to the fourth network element.

It should be noted that for implementation processes of S601 to S611, reference may be made to related descriptions of the method embodiments 300 to 500, with the same or corresponding technical effect achieved. To avoid repetition, details are not described herein again.

In addition, in this embodiment, the federated model training process may include but is not limited to S601 to S611, for example, may include more or fewer steps than S601 to S611. This is not limited herein.

Example 2

As shown in FIG. 6b, a model training process provided in Example 2 is as follows.

S621: A fourth network element transmits a model request message to a first network element.

S622: The first network element determines, based on the model request message, to perform a federated model training process.

S623: The first network element obtains, from an NRF, two second network elements, for example, a training entity A and a training entity B, that are able to participate in the federated model training process.

S624: The first network element transmits a federated model training request message to the training entity A and the training entity B.

S625: After receiving the federated model training request message, the training entity A trains a local training model based on the federated model training request message, and then obtains a first training result based on a trained local training model.

S626: The training entity A reports first information to the first network element, where the first information includes at least the first training result.

S627: The first network element performs model training based on the received first training result that is transmitted by the training entity A, to obtain a target model and/or a second training result.

S628: The first network element determines whether a calculation result of a loss function corresponding to the target model meets a predetermined requirement.

S629: In a case that the calculation result of the loss function of the target model does not meet the predetermined requirement, the first network element transmits second information to the training entity A, where the second information includes at least the second training result.

S630: The training entity A performs local model training again based on the received second training result to re-obtain the first training result and report the first training result, so as to implement cyclic iterations of the federated model training process.

S631: After receiving the federated model training request message, the training entity B trains a local training model based on the federated model training request message, and then obtains a first training result based on a trained local training model.

S632: The training entity B reports first information to the first network element, where the first information includes at least the first training result.

S633: The first network element performs model training based on the received first training result that is transmitted by the training entity B, to obtain a target model and/or a second training result.

S634: The first network element determines whether a calculation result of a loss function corresponding to the target model meets a predetermined requirement.

S635: In a case that the calculation result of the loss function of the target model does not meet the predetermined requirement, the first network element transmits second information to the training entity B, where the second information includes at least the second training result.

S636: The training entity B performs local model training again based on the received second training result to re-obtain the first training result and report the first training result, so as to implement cyclic iterations of the federated model training process.

It can be understood that the first network element, the training entity A, and the training entity B repeatedly perform S605 to S610, until a calculation result of a loss function corresponding to a target model meets the predetermined requirement, that is, the target model converges, and then stop the federated model training process.

S637: In a case that the calculation result of the loss function of the target model meets the predetermined requirement, the first network element transmits related information of the target model to the fourth network element.

It should be noted that for implementation processes of S621 to S637, reference may be made to related descriptions of the method embodiments 300 to 500, with the same or corresponding technical effect achieved. To avoid repetition, details are not described herein again.

In addition, in this embodiment, the federated model training process may include but is not limited to S621 to S637, for example, may include more or fewer steps than S621 to S637. This is not limited herein.

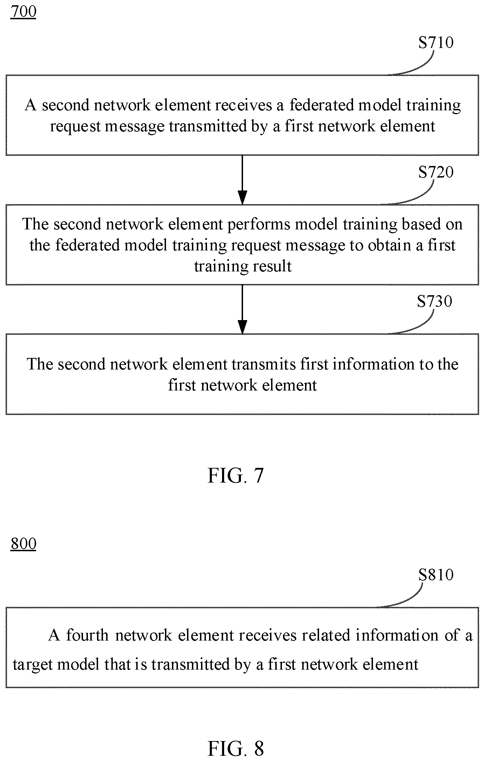

FIG. 7 is a schematic flowchart of a model training method 700 according to an example embodiment of this application. The method 700 may be performed by a second network element (for example, a terminal or a network-side device) but is not limited thereto, and may be specifically performed by hardware and/or software installed in the second network element. In this embodiment, the method 700 may include at least the following steps.

S710: The second network element receives a federated model training request message transmitted by a first network element, where the federated model training request message is used to request the second network element to participate in a federated model training process corresponding to a model training task.

S720: The second network element performs model training based on the federated model training request message to obtain a first training result.

S730: The second network element transmits first information to the first network element, where the first information includes at least the first training result.

The first training result corresponds to training data used by the second network element for the federated model training process. A sample used by the second network element for the federated model training and a sample used by a fifth network element for the federated model training are different but have same sample features. The fifth network element is a network element, other than the second network element, among a plurality of network elements participating in the federated model training process. For example, it is assumed that second network elements participating in model training include a network element 1, a network element 2, a network element 3, and a network element 4, and a second network element performing the method embodiment 700 is the network element 1. In this case, the fifth network element is one or more of the network element 2, the network element 3, and the network element 4. This is not limited herein.

Optionally, the federated model training request message includes at least one of the following: model instance identification information, where the model instance identification information corresponds to the target model and is allocated by the first network element; type information of the model training task; identification information of the model training task; first indication information, used to indicate that the federated model training process is a horizontal federated learning process; related information of a first filter, used to define at least one of a target object, target time, and a target area that correspond to the model training task; related information of a first model, where the related information of the first model is used by each second network element to perform local model training; model training configuration information; reporting information of the first training result; and related information of each network element participating in the federated model training process.

Optionally, the model instance identification information corresponds to at least one of the following: related information of the first network element; first time, used to indicate that the model training task is performed based on training data generated within the first time; second time, used to indicate completion time of the federated model training process; and related information of each network element participating in the federated model training process.

Optionally, the model training configuration information includes at least one of the following: model structure information; model hyperparameter information; type information of training data in the federated model training process; model training condition information, used to indicate, to the second network element, a condition under which the first network element starts model training based on the first training result reported by the second network element; model training count information, used to indicate the number of times of local model training that the second network element needs to perform before transmitting the first information to the first network element; and model training duration information, used to indicate duration of local model training that the second network element is to perform before transmitting the first information to the first network element.

Optionally, the model training condition information includes at least one of the following: third time, used to indicate that model training is to start in a case that waiting time of the first network element waiting for the second network element to feed back the first training result reaches the third time; and a first threshold, used to indicate that model training is to start in a case that the number of first training results received by the first network element reaches the first threshold.

Optionally, the reporting information of the first training result includes at least one of the following: a reporting format of the first training result; and a reporting condition of the first training result.

Optionally, the first training result includes model information of a second model and/or first gradient information corresponding to the second model obtained by the second network element through training based on a local training model.

Optionally, the second network element is a network element that is obtained by the first network element from a network repository function NRF based on the model training task and that is able to support the federated model training process.

Optionally, the first information further includes at least one of the following: model instance identification information, used by the first network element to perform model association.

Optionally, the step of performing, by the second network element, model training based on the model training request message to obtain a first training result includes: determining, by the second network element based on the first indication information, that a federated model training process needs to be performed; determining, by the second network element based on the type information or the identification information of the model training task, a model training task corresponding to the federated model training; obtaining, by the second network element, training data based on the model training task and the related information of the first filter; determining, by the second network element based on the model training configuration information and/or the related information of the first model, a local training model and a model training mode for training the local training model; and training, by the second network element, the local training model based on the model training mode, and performing calculation on the training data based on a trained local training model to obtain the first training result.

Optionally, the second network element receives second information transmitted by the first network element, where the second information includes at least a second training result.

Optionally, the step of receiving, by the second network element, second information transmitted by the first network element includes any one of the following: receiving, by the second network element, specified information transmitted by the first network element, where the specified information belongs to the second information and is different from information included in the federated model training request message; or receiving, by the second network element, all information in the second information transmitted by the first network element.

Optionally, the second information is transmitted by the first network element in a case that a calculation result of a loss function of the target model does not meet a predetermined requirement.

Optionally, the second training result includes at least second gradient information of the loss function of the target model with respect to a parameter of the target model or information of the target model.

Optionally, the second information further includes at least one of the following: model instance identification information, used by the second network element to perform model association; related information of each network element participating in the federated model training process; and model training configuration information corresponding to the target model.

It can be understood that for implementation processes of implementations of the method embodiment 700, reference may be made to related descriptions in the method embodiments 300 to 600, with the same or corresponding technical effect achieved. To avoid repetition, details are not described herein again.

FIG. 8 is a schematic flowchart of a model training method 800 according to an example embodiment of this application. The method 800 may be performed by a fourth network element (for example, a terminal or a network-side device) but is not limited thereto, and may be specifically performed by hardware and/or software installed in the fourth network element. In this embodiment, the method 800 may include at least the following steps.

S810: The fourth network element receives related information of a target model that is transmitted by a first network element.

The related information of the target model is used to represent at least that the target model is a horizontal federated model.

Optionally, the related information of the target model includes at least one of the following: model instance identification information, where the model instance identification information corresponds to the target model and is allocated by the first network element; third model information, where the third model information includes network structure information and/or model parameter information of the target model; second indication information, used to indicate that the target model is a horizontal federated learning model; and related information of a second network element and/or a third network element, where the second network element and/or the third network element are network elements participating in training of the target model.

Optionally, the related information of the target model is transmitted by the first network element in a case that a calculation result of a loss function meets a predetermined requirement.

Optionally, the method further includes: transmitting, by the fourth network element, a model request message to the first network element, where the model request message includes at least one of the following: type information of a model training task; identification information of the model training task; related information of a second filter, used to define at least one of a target object, target time, and a target area that correspond to the model training task; and model feedback-related information, where the model feedback-related information includes at least one of a model description manner and feedback time.

It can be understood that for implementation processes of implementations of the method embodiment 800, reference may be made to related descriptions in the method embodiments 300 to 600, with the same or corresponding technical effect achieved. To avoid repetition, details are not described herein again.

The model training methods 300 to 800 provided in embodiments of this application may be performed by a model training apparatus. In embodiments of this application, a model training apparatus provided in embodiments of this application is described by using an example in which the model training apparatus performs the model training method.

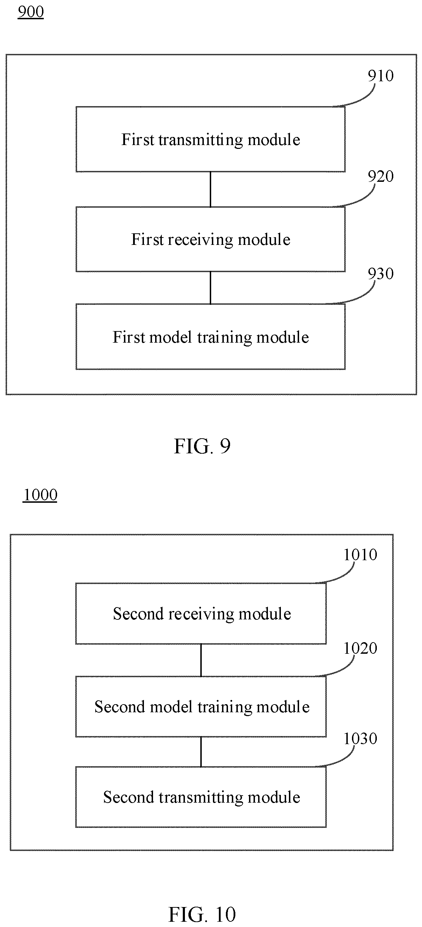

FIG. 9 is a schematic structural diagram of a model training apparatus 900 according to an example embodiment of this application. The apparatus 900 includes a first transmitting module 910, configured to transmit a federated model training request message to at least one second network element in a case that a federated model training process corresponding to a model training task is performed, where the at least one second network element is a network element participating in the federated model training process, and samples corresponding to training data used by different second network elements for the federated model training process are different but have same sample features; a first receiving module 920, configured to receive first information transmitted by the at least one second network element, where the first information includes at least a first training result, and the first training result corresponds to training data used by the second network element for the federated model training process; and a first model training module 930, configured to perform model training based on a first model and the first training result reported by the at least one second network element, to obtain a target model and/or a second training result.

Optionally, the federated model training request message includes at least one of the following: model instance identification information, where the model instance identification information corresponds to the target model and is allocated by the first network element; type information of the model training task; identification information of the model training task; first indication information, used to indicate that the federated model training process is a horizontal federated learning process; related information of a first filter, used to define at least one of a target object, target time, and a target area that correspond to the model training task; related information of a first model, where the related information of the first model is used by each second network element to perform local model training; model training configuration information; reporting information of the first training result; and related information of each network element participating in the federated model training process.

Optionally, the model instance identification information corresponds to at least one of the following: related information of the first network element; first time, used to indicate that the model training task is performed based on training data generated within the first time; second time, used to indicate completion time of the federated model training process; and related information of the second network element.

Optionally, the model training configuration information includes at least one of the following: model structure information; model hyperparameter information; type information of training data in the federated model training process; model training condition information, used to indicate, to the second network element, a condition under which the first network element starts model training based on the first training result reported by the second network element; model training count information, used to indicate the number of times of local model training that the second network element needs to perform before transmitting the first information to the first network element; and model training duration information, used to indicate duration of local model training that the second network element needs to perform before transmitting the first information to the first network element.

Optionally, the model training condition information includes at least one of the following: third time, used to indicate that model training is to start in a case that waiting time of the first network element waiting for the second network element to feed back the first training result reaches the third time; and a first threshold, used to indicate that model training is to start in a case that the number of first training results received by the first network element reaches the first threshold.

Optionally, the reporting information of the first training result includes at least one of the following: a reporting format of the first training result; and a reporting condition of the first training result.

Optionally, the first training result includes model information of a second model obtained and/or first gradient information corresponding to the second model by the second network element through training based on a local training model.

Optionally, the first information further includes at least one of the following: model instance identification information, used by the first network element to perform model association.

Optionally, the second network element is a network element that is obtained by the first network element from a network repository function NRF based on the model training task and that is able to support the federated model training process.

Optionally, the first model training module 930 is further configured to determine that a first condition is met, where the first condition includes at least one of the following: that all or some of training data corresponding to the model training task is not stored in the first network element or is not able to be obtained; that the at least one second network element is able to provide all or some of the training data corresponding to the model training task; and that training data corresponding to the model training task and used by different second network elements has different samples with same sample features.

Optionally, the first transmitting module 910 is further configured to transmit second information to the at least one second network element in a case that a calculation result of a loss function of the target model does not meet a predetermined requirement, where the second information includes at least the second training result, and the second training result is used by the second network element to perform local model training again and re-obtain a first training result.

Optionally, the step of transmitting, by the first transmitting module 910, the second information to the at least one second network element includes any one of the following: for each second network element, transmitting specified information to the second network element, where the specified information belongs to the second information and is different from information included in the federated model training request message; or for each second network element, transmitting all information in the second information to the second network element.

Optionally, the first transmitting module 910 is further configured to transmit second information to at least one third network element in a case that the calculation result of the loss function of the target model does not meet the predetermined requirement, where the second information includes at least the second training result, the second training result is used by the third network element to perform local model training to obtain a third training result, and the third network element is a network element that is re-determined by the first network element and that participates in the federated model training process.

Optionally, the second training result includes at least second gradient information of the loss function with respect to a parameter of the target model or information of the target model.

Optionally, the second information further includes at least one of the following: model instance identification information, used by the second network element to perform model association; reporting information of the first training result; related information of each network element participating in the federated model training process; and model training configuration information corresponding to the target model.

Optionally, the first receiving module 920 is further configured to receive a model request message transmitted by a fourth network element, where the model request message includes at least one of the following: the type information of the model training task; the identification information of the model training task; related information of a second filter, used to define at least one of a target object, target time, and a target area that correspond to the model training task; and model feedback-related information, where the model feedback-related information includes at least one of a model feedback format and a feedback condition.

Optionally, the first transmitting module 910 is further configured to transmit related information of the target model to the fourth network element in a case that the calculation result of the loss function of the target model meets the predetermined requirement, where the related information of the target model includes at least one of the following: the model instance identification information; information of the target model; second indication information, used to indicate that the target model is a horizontal federated learning model; and related information of the second network element and/or the third network element.

FIG. 10 is a schematic structural diagram of a model training apparatus 1000 according to an example embodiment of this application. The apparatus 1000 includes: a second receiving module 1010, configured to receive, for a second network element, a federated model training request message transmitted by a first network element, where the federated model training request message is used to request the second network element to participate in a federated model training process corresponding to a model training task; a second model training module 1020, configured to perform model training based on the federated model training request message to obtain a first training result; and a second transmitting module 1030, configured to transmit first information to the first network element, where the first information includes at least the first training result, where the first training result corresponds to training data used by the second network element for the federated model training process, a sample used by the second network element for the federated model training and a sample used by a fifth network element for the federated model training are different but have same sample features, and the fifth network element is a network element, other than the second network element, among a plurality of network elements participating in the federated model training process.

Optionally, the federated model training request message includes at least one of the following: model instance identification information, where the model instance identification information corresponds to the target model and is allocated by the first network element; type information of the model training task; identification information of the model training task; first indication information, used to indicate that the federated model training process is a horizontal federated learning process; related information of a first filter, used to define at least one of a target object, target time, and a target area that correspond to the model training task; related information of a first model, where the related information of the first model is used by each second network element to perform local model training; model training configuration information; reporting information of the first training result; and related information of each network element participating in the federated model training process.

Optionally, the model instance identification information corresponds to at least one of the following: related information of the first network element; first time, used to indicate that the model training task is performed based on training data generated within the first time; second time, used to indicate completion time of the federated model training process; and related information of each network element participating in the federated model training process.

Optionally, the model training configuration information includes at least one of the following: model structure information; model hyperparameter information; type information of training data in the federated model training process; model training condition information, used to indicate, to the second network element, a condition under which the first network element starts model training based on the first training result reported by the second network element; model training count information, used to indicate the number of times of local model training that the second network element needs to perform before transmitting the first information to the first network element; and model training duration information, used to indicate duration of local model training that the second network element needs to perform before transmitting the first information to the first network element.

Optionally, the model training condition information includes at least one of the following: third time, used to indicate that model training is to start in a case that waiting time of the first network element waiting for the second network element to feed back the first training result reaches the third time; and a first threshold, used to indicate that model training is to start in a case that the number of first training results received by the first network element reaches the first threshold.

Optionally, the reporting information of the first training result includes at least one of the following: a reporting format of the first training result; and a reporting condition of the first training result.

Optionally, the first training result includes model information of a second model and/or first gradient information corresponding to the second model obtained by the second network element through training based on a local training model.

Optionally, the second network element is a network element that is obtained by the first network element from a network repository function NRF based on the model training task and that is able to support the federated model training process.

Optionally, the first information further includes at least one of the following: model instance identification information, used by the first network element to perform model association.

Optionally, the step of performing, by the second model training module 1020, model training based on the model training request message to obtain the first training result includes: determining, based on the first indication information, that a federated model training process needs to be performed; determining, based on the type information or the identification information of the model training task, a model training task corresponding to the federated model training; obtaining training data based on the model training task and the related information of the first filter; determining, based on the model training configuration information and/or the related information of the first model, a local training model and a model training mode for training the local training model; and training the local training model based on the model training mode, and performing calculation on the training data based on a trained local training model to obtain the first training result.

Optionally, the second receiving module 1010 is further configured to receive second information transmitted by the first network element, where the second information includes at least a second training result.

Optionally, the step of receiving, by the second receiving module 1010, the second information transmitted by the first network element includes any one of the following: receiving specified information transmitted by the first network element, where the specified information belongs to the second information and is different from information included in the federated model training request message; or receiving all information in the second information transmitted by the first network element.

Optionally, the second information is transmitted by the first network element in a case that a calculation result of a loss function of the target model does not meet a predetermined requirement.

Optionally, the second training result includes at least second gradient information of the loss function of the target model with respect to a parameter of the target model or information of the target model.

Optionally, the second information further includes at least one of the following: model instance identification information, used by the second network element to perform model association; related information of each network element participating in the federated model training process; and model training configuration information corresponding to the target model.

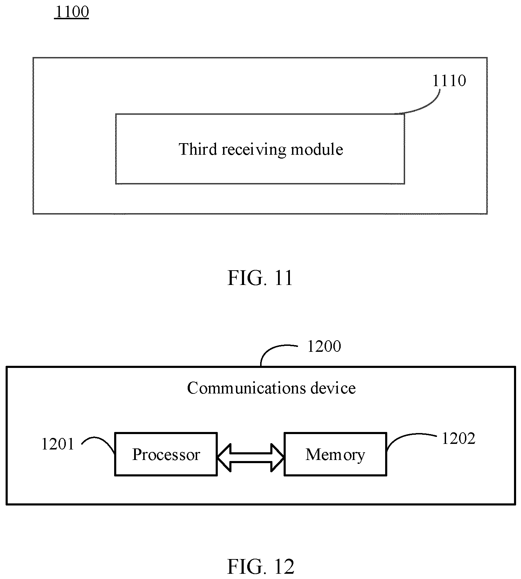

FIG. 11 is a schematic structural diagram of a model training apparatus 1100 according to an example embodiment of this application. The apparatus 1100 includes: a third receiving module 1110, configured to receive related information of a target model that is transmitted by a first network element, where the related information of the target model is used to represent at least that the target model is a horizontal federated model.

Optionally, the related information of the target model includes at least one of the following: model instance identification information, where the model instance identification information corresponds to the target model and is allocated by the first network element; third model information, where the third model information includes network structure information and/or model parameter information of the target model; second indication information, used to indicate that the target model is a horizontal federated learning model; and related information of a second network element and/or a third network element, where the second network element and/or the third network element are network elements participating in training of the target model.

Optionally, the related information of the target model is transmitted by the first network element in a case that a calculation result of a loss function meets a predetermined requirement.

Optionally, the apparatus 1100 further includes a third transmitting module, configured to transmit a model request message to the first network element, where the model request message includes at least one of the following: type information of a model training task; identification information of the model training task; related information of a second filter, used to define at least one of a target object, target time, and a target area that correspond to the model training task; and model feedback-related information, where the model feedback-related information includes at least one of a model description manner and feedback time.

The model training apparatuses 900, 1000, and 1100 in embodiments of this application each may be a communications device, for example, a communications device with an operating system; or may be a component, for example, an integrated circuit or a chip, in a communications device. The communications device may be a terminal or a network-side device. For example, the terminal may include but is not limited to the aforementioned types of the terminal 11, and the network-side device may include but is not limited to the aforementioned types of the network-side device 12. This is not specifically limited in embodiments of this application.

The model training apparatuses 900, 1000, and 1100 provided in embodiments of this application are capable of implementing the processes implemented in the method embodiments of FIG. 3 to FIG. 8, with the same technical effect achieved. To avoid repetition, details are not described herein again.

Optionally, as shown in FIG. 12, embodiments of this application further provide a communications device 1200, including a processor 1201 and a memory 1202. The memory 1202 stores a program or instructions executable on the processor 1201. For example, in a case that the communications device 1200 is a terminal, when the program or instructions are executed by the processor 1201, the steps of the model training method embodiments 300 to 800 are implemented, with the same technical effect achieved. In a case that the communications device 1200 is a network-side device, when the program or instructions are executed by the processor 1201, the steps of the method embodiments 300 to 800 are implemented, with the same technical effect achieved. To avoid repetition, details are not described herein again.

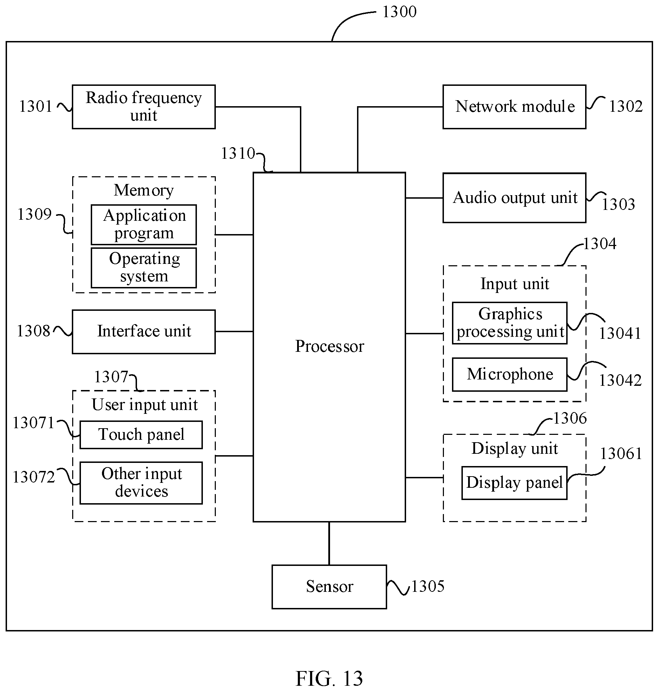

In an implementation, the communications device 1200 may be a terminal. The terminal may include a processor and a communications interface. The communications interface is coupled to the processor. The processor is configured to run a program or instructions to implement the steps of the methods in the method embodiments 300 to 800. The terminal embodiment corresponds to the foregoing terminal-side method embodiment, and all implementation processes and implementations of the foregoing method embodiment are applicable to the terminal embodiment, with the same technical effect achieved. Specifically, FIG. 13 is a schematic diagram of a hardware structure of a terminal for implementing embodiments of this application.

The terminal 1300 includes but is not limited to at least some of components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art can understand that the terminal 1300 may further include a power supply (for example, a battery) that supplies power to each component. The power supply may be logically connected to the processor 1310 by using a power management system, to implement functions such as charging management, discharging management, and power consumption management by using the power management system. The terminal structure shown in FIG. 13 does not constitute a limitation on the terminal. The terminal may include more or fewer components than shown in the figure, or some components may be combined, or there may be a different component layout. Details are not described herein again.

It should be understood that in this embodiment of this application, the input unit 1304 may include a graphics processing unit (Graphics Processing Unit, GPU) 13041 and a microphone 13042. The graphics processing unit 13041 processes image data of a static picture or a video that is obtained by an image capture apparatus (for example, a camera) in a video capture mode or an image capture mode. The display unit 1306 may include a display panel 13061 .

The display panel 13061 may be configured in a form of a liquid crystal display, an organic light-emitting diode, or the like. The user input unit 1307 includes at least one of a touch panel 13071 and other input devices 13072. The touch panel 13071 is also referred to as a touchscreen. The touch panel 13071 may include two parts: a touch detection apparatus and a touch controller. The other input devices 13072 may include but are not limited to a physical keyboard, a function key (such as a volume control key or an on/off key), a trackball, a mouse, and a joystick. Details are not described herein.

In this embodiment of this application, after receiving downlink data from a network-side device, the radio frequency unit 1301 may transmit the downlink data to the processor 1310 for processing. In addition, the radio frequency unit 1301 may transmit uplink data to the network-side device. Usually, the radio frequency unit 1301 includes but is not limited to an antenna, an amplifier, a transceiver, a coupler, a low noise amplifier, a duplexer, and the like.

The memory 1309 may be configured to store software programs or instructions and various data. The memory 1309 may mainly include a first storage area for storing a program or instructions and a second storage area for storing data. The first storage area may store an operating system, an application program or instructions required by at least one function (for example, an audio play function or an image play function), and the like. In addition, the memory 1309 may include a volatile memory or a non-volatile memory, or the memory 1309 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), or a direct rambus random access memory (Direct Rambus RAM, DRRAM). The memory 1309 in this embodiment of this application includes but is not limited to these and any other suitable types of memories.

The processor 1310 may include one or more processing units. Optionally, the processor 1310 integrates an application processor and a modem processor. The application processor mainly processes operations related to an operating system, a user interface, an application program, and the like. The modem processor mainly processes wireless communication signals, for example, is a baseband processor. It can be understood that the modem processor may alternatively not be integrated in the processor 1310.

The radio frequency unit 1301 is configured to: transmit a federated model training request message to at least one second network element in a case that a federated model training process corresponding to a model training task is performed, where the at least one second network element is a network element participating in the federated model training process, and samples corresponding to training data used by different second network elements for the federated model training process are different but have same sample features; and receive first information transmitted by the at least one second network element, where the first information includes at least a first training result, and the first training result corresponds to training data used by the second network element for the federated model training process. The processor 1310 is configured to perform model training based on a first model and the first training result reported by the at least one second network element, to obtain a target model and/or a second training result.

In this embodiment, local distributed model training is implemented through horizontal federated learning by combining the second network elements. This can ensure data privacy and data security in the second network elements and can further ensure model training effect without sharing data in the second network elements on a communications network.

In another implementation, the communications device 1200 may alternatively be a network-side device. The network-side device includes a processor and a communications interface. The communications interface is coupled to the processor. The processor is configured to run a program or instructions to implement the steps of the methods in the embodiments 300 to 800. The network-side device embodiment corresponds to the foregoing method embodiment for the network-side device, and all implementation processes and implementations of the foregoing method embodiment are applicable to the network-side device embodiment, with the same technical effect achieved.

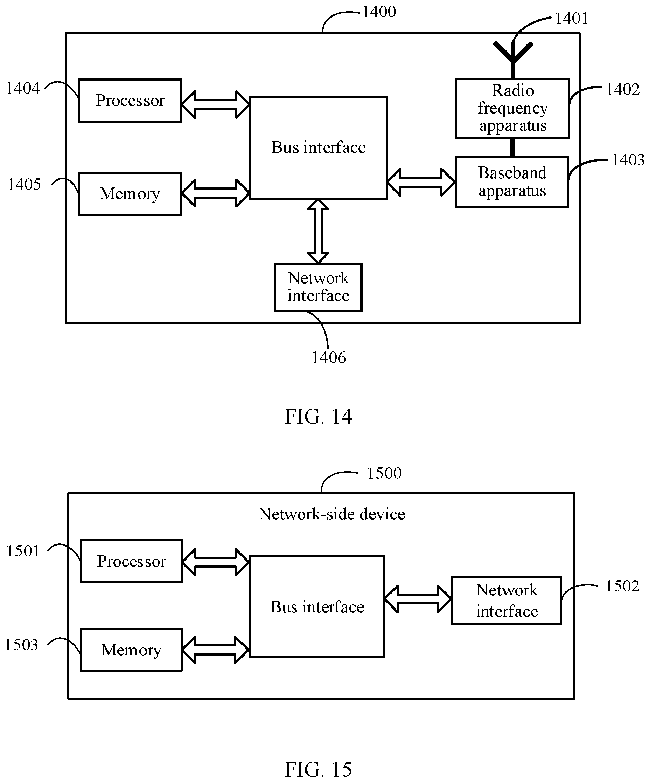

For example, FIG. 14 is a schematic structural diagram of a network-side device according to an embodiment of this application. The network-side device 1400 includes an antenna 1401, a radio frequency apparatus 1402, a baseband apparatus 1403, a processor 1404, and a memory 1405. The antenna 1401 is connected to the radio frequency apparatus 1402. In an uplink direction, the radio frequency apparatus 1402 receives information through the antenna 1401, and transmits the received information to the baseband apparatus 1403 for processing. In a downlink direction, the baseband apparatus 1403 processes to-be-transmitted information, and transmits the information to the radio frequency apparatus 1402; and the radio frequency apparatus 1402 processes the received information and then transmits the information through the antenna 1401.

The method performed by the network-side device in the foregoing embodiment may be implemented in the baseband apparatus 1403, and the baseband apparatus 1403 includes a baseband processor.

The baseband apparatus 1403 may include, for example, at least one baseband board, where a plurality of chips are disposed on the baseband board. As shown in FIG. 14, one of the chips is, for example, the baseband processor, which is connected to the memory 1405 through a bus interface, to invoke a program in the memory 1405 to perform the operations of the network device shown in the foregoing method embodiments.

The network-side device may further include a network interface 1406. The interface is, for example, a common public radio interface (common public radio interface, CPRI).

Specifically, the network-side device 1400 in this embodiment of the present invention further includes instructions or a program stored in the memory 1405 and executable on the processor 1404, and the processor 1404 invokes the instructions or program in the memory 1405 to perform the method performed by the modules shown in FIG. 9 to FIG. 11, with the same technical effect achieved. To avoid repetition, details are not described herein again.

For example, FIG. 15 is a schematic structural diagram of a network-side device 1500 according to another example embodiment of this application. The network-side device 1500 includes a processor 1501, a network interface 1502, and a memory 1503. The network interface 1502 is, for example, a common public radio interface (common public radio interface, CPRI).

Specifically, the network-side device 1500 in this embodiment of the present invention further includes instructions or a program stored in the memory 1503 and executable on the processor 1501, and the processor 1501 invokes the instructions or program in the memory 1503 to perform the method performed by the modules shown in FIG. 9 to FIG. 11, with the same technical effect achieved. To avoid repetition, details are not described herein again.

Embodiments of this application further provide a readable storage medium. The readable storage medium stores a program or instructions. When the program or instructions are executed by a processor, the processes of the model training method embodiments are implemented, with the same technical effect achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

Embodiments of this application further provide a chip. The chip includes a processor and a communications interface. The communications interface is coupled to the processor. The processor is configured to run a program or instructions for a network-side device, to implement the processes of the model training method embodiments, with the same technical effect achieved. To avoid repetition, details are not described herein again.

It should be understood that the chip mentioned in embodiments of this application may also be referred to as a system-level chip, a system on chip, a chip system, a system-on-a-chip, or the like.

Embodiments of this application further provide a computer program product. The computer program product includes a processor, a memory, and a program or instructions stored in the memory and executable on the processor. When the program or instructions are executed by the processor, the processes of the model training method embodiments are implemented, with the same technical effect achieved. To avoid repetition, details are not described herein again.

Embodiments of the application further provide a model training system, including a first network element, a second network element, and a third network element. The first network element may be configured to perform the steps of the methods in the method embodiments 300 to 600. The second network element may be configured to perform the steps of the method in the method embodiment 700. The third network element may be configured to perform the steps of the method in the method embodiment 800.

It should be noted that in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a ..." does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, a person skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product.

EP 4 459 503 A1

The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in embodiments of this application.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

**Claims**

1. A model training method, comprising:

transmitting, by a first network element, a federated model training request message to at least one second network element when performing a federated model training process corresponding to a model training task, wherein the at least one second network element is a network element participating in the federated model training process, and samples corresponding to training data used by different second network elements for the federated model training process are different but have same sample features;

receiving, by the first network element, first information transmitted by the at least one second network element, wherein the first information comprises at least a first training result, and the first training result corresponds to training data used by the second network element for the federated model training process; and

performing, by the first network element, model training based on a first model and the first training result reported by the at least one second network element, to obtain a target model and/or a second training result.

2. The method according to claim 1, wherein the federated model training request message comprises at least one of the following:

model instance identification information, wherein the model instance identification information corresponds to the target model and is allocated by the first network element;

type information of the model training task;

identification information of the model training task;

first indication information, used to indicate that the federated model training process is a horizontal federated learning process;

related information of a first filter, used to define at least one of a target object, target time, and a target area that correspond to the model training task;

related information of the first model, wherein the related information of the first model is used by each second network element to perform local model training;

model training configuration information;

reporting information of the first training result; and

related information of each network element participating in the federated model training process.

3. The method according to claim 2, wherein the model instance identification information corresponds to at least one of the following:

related information of the first network element;

first time, used to indicate that the model training task is performed based on training data generated within the first time;

second time, used to indicate completion time of the federated model training process; and

related information of the second network element.

4. The method according to claim 2, wherein the model training configuration information comprises at least one of the following:

model structure information;

model hyperparameter information;

type information of training data in the federated model training process;

model training condition information, used to indicate, to the second network element, a condition under which

25

the first network element starts model training based on the first training result reported by the second network element;

model training count information, used to indicate the number of times of local model training that the second network element needs to perform before transmitting the first information to the first network element; and

model training duration information, used to indicate duration of local model training that the second network element needs to perform before transmitting the first information to the first network element.

5. The method according to claim 4, wherein the model training condition information comprises at least one of the following:

third time, used to indicate that model training is to start in a case that waiting time of the first network element waiting for the second network element to feed back the first training result reaches the third time; and

a first threshold, used to indicate that model training is to start in a case that the number of first training results received by the first network element reaches the first threshold.

6. The method according to claim 2, wherein the reporting information of the first training result comprises at least one of the following:

a reporting format of the first training result; and

a reporting condition of the first training result.

7. The method according to claim 1, wherein the first training result comprises model information of a second model and/or first gradient information corresponding to the second model obtained by the second network element through training based on a local training model.

8. The method according to claim 1, wherein the first information further comprises at least one of the following: model instance identification information, used by the first network element to perform model association.

9. The method according to claim 1, wherein the second network element is a network element that is obtained by the first network element from a network repository function NRF based on the model training task and that is able to support the federated model training process.

10. The method according to any one of claims 1 to 9, wherein the method further comprises:

determining, by the first network element, that a first condition is met, wherein the first condition comprises at least one of the following:

that all or some of training data corresponding to the model training task is not stored in the first network element or is not able to be obtained;

that the at least one second network element is able to provide all or some of the training data corresponding to the model training task; and

that training data corresponding to the model training task and used by different second elements has different samples with same sample features.

11. The method according to any one of claims 1 to 9, wherein the method further comprises:

transmitting, by the first network element, second information to the at least one second network element in a case that a calculation result of a loss function of the target model does not meet a predetermined requirement, wherein

the second information comprises at least the second training result, and the second training result is used by the second network element to perform local model training again and re-obtain a first training result.

12. The method according to claim 11, wherein the step of transmitting second information to the at least one second network element comprises any one of the following:

for each second network element, transmitting specified information to the second network element, wherein the specified information belongs to the second information and is different from information comprised in the federated model training request message; or

for each second network element, transmitting all information in the second information to the second network element.

13. The method according to any one of claims 1 to 9, wherein the method further comprises:

   transmitting, by the first network element, second information to at least one third network element in a case that a calculation result of a loss function of the target model does not meet a predetermined requirement, wherein the second information comprises at least the second training result, the second training result is used by the third network element to perform local model training to obtain a third training result, and the third network element is a network element that is re-determined by the first network element and that participates in the federated model training process.

14. The method according to claim 11 or 13, wherein the second training result comprises at least second gradient information of the loss function with respect to a parameter of the target model or information of the target model.

15. The method according to claim 11 or 13, wherein the second information further comprises at least one of the following:

   model instance identification information, used by the second network element to perform model association;
   reporting information of the first training result;
   related information of each network element participating in the federated model training process; and
   model training configuration information corresponding to the target model.

16. The method according to any one of claims 1 to 15, wherein the method further comprises:
   receiving, by the first network element, a model request message transmitted by a fourth network element, wherein the model request message comprises at least one of the following:

   the type information of the model training task;
   the identification information of the model training task;
   related information of a second filter, used to define at least one of a target object, target time, and a target area that correspond to the model training task; and
   model feedback-related information, wherein the model feedback-related information comprises at least one of a model feedback format and a feedback condition.

17. The method according to claim 16, wherein the method further comprises:

   transmitting, by the first network element, related information of the target model to the fourth network element in a case that the calculation result of the loss function of the target model meets the predetermined requirement, wherein
   the related information of the target model comprises at least one of the following:

      the model instance identification information;
      information of the target model;
      second indication information, used to indicate that the target model is a horizontal federated learning model; and
      related information of the second network element and/or the third network element.

18. A model training method, wherein the method comprises:

   receiving, by a second network element, a federated model training request message transmitted by a first network element, wherein the federated model training request message is used to request the second network element to participate in a federated model training process corresponding to a model training task;
   performing, by the second network element, model training based on the federated model training request message to obtain a first training result; and
   transmitting, by the second network element, first information to the first network element, wherein the first information comprises at least the first training result, wherein
   the first training result corresponds to training data used by the second network element for the federated model training process, a sample used by the second network element for the federated model training and a sample used by a fifth network element for the federated model training are different but have same sample features, and the fifth network element is a network element, other than the second network element, among a plurality of network elements participating in the federated model training process.

19. The method according to claim 18, wherein the federated model training request message comprises at least one of the following:

model instance identification information, wherein the model instance identification information corresponds to a target model and is allocated by the first network element;
type information of the model training task;
identification information of the model training task;
first indication information, used to indicate that the federated model training process is a horizontal federated learning process;
related information of a first filter, used to define at least one of a target object, target time, and a target area that correspond to the model training task;
related information of a first model, wherein the related information of the first model is used by each second network element to perform local model training;
model training configuration information;
reporting information of the first training result; and
related information of each network element participating in the federated model training process.

20. The method according to claim 19, wherein the model instance identification information corresponds to at least one of the following:

related information of the first network element;
first time, used to indicate that the model training task is performed based on training data generated within the first time;
second time, used to indicate completion time of the federated model training process; and
related information of each network element participating in the federated model training process.

21. The method according to claim 19, wherein the model training configuration information comprises at least one of the following:

model structure information;
model hyperparameter information;
type information of training data in the federated model training process;
model training condition information, used to indicate, to the second network element, a condition under which the first network element starts model training based on first training result reported by the second network element;
model training count information, used to indicate the number of times of local model training that the second network element needs to perform before transmitting the first information to the first network element; and
model training duration information, used to indicate duration of local model training that the second network element needs to perform before transmitting the first information to the first network element.

22. The method according to claim 21, wherein the model training condition information comprises at least one of the following:

third time, used to indicate that model training is to start in a case that waiting time of the first network element waiting for the second network element to feed back the first training result reaches the third time; and
a first threshold, used to indicate that model training is to start in a case that the number of first training results received by the first network element reaches the first threshold.

23. The method according to claim 19, wherein the reporting information of the first training result comprises at least one of the following:

a reporting format of the first training result; and
a reporting condition of the first training result.

24. The method according to claim 18, wherein the first training result comprises model information of a second model and/or first gradient information corresponding to the second model obtained by the second network element through training based on a local training model.

25. The method according to claim 18, wherein the second network element is a network element that is obtained by the first network element from a network repository function NRF based on the model training task and that is able to support the federated model training process.

26. The method according to claim 18, wherein the first information further comprises at least one of the following: model instance identification information, used by the first network element to perform model association.

27. The method according to claim 19, wherein the step of performing, by the second network element, model training based on the model training request message to obtain a first training result comprises:

determining, by the second network element based on the first indication information, that a federated model training process needs to be performed;
determining, by the second network element based on the type information or the identification information of the model training task, a model training task corresponding to the federated model training;
obtaining, by the second network element, training data based on the model training task and the related information of the first filter;
determining, by the second network element based on the model training configuration information and/or the related information of the first model, a local training model and a model training mode for training the local training model; and
training, by the second network element, the local training model based on the model training mode, and performing calculation on the training data based on a trained local training model to obtain the first training result.

28. The method according to claim 18, wherein the method further comprises:
receiving, by the second network element, second information transmitted by the first network element, wherein the second information comprises at least a second training result.

29. The method according to claim 28, wherein the step of receiving, by the second network element, second information transmitted by the first network element comprises any one of the following:

receiving, by the second network element, specified information transmitted by the first network element, wherein the specified information belongs to the second information and is different from information comprised in the federated model training request message; or
receiving, by the second network element, all information in the second information transmitted by the first network element.

30. The method according to claim 28, wherein the second information is transmitted by the first network element in a case that a calculation result of a loss function of the target model does not meet a predetermined requirement.

31. The method according to claim 28, wherein the second training result comprises at least second gradient information of the loss function of the target model with respect to a parameter of the target model or information of the target model.

32. The method according to claim 28, wherein the second information further comprises at least one of the following:

model instance identification information, used by the second network element to perform model association;
information of the target model;
related information of each network element participating in the federated model training process; and
model training configuration information corresponding to the target model.

33. A model training method, wherein the method comprises:

receiving, by a fourth network element, related information of a target model that is transmitted by a first network element, wherein
the related information of the target model is used to represent at least that the target model is a horizontal federated model.

34. The method according to claim 33, wherein the related information of the target model comprises at least one of the following:

   model instance identification information, wherein the model instance identification information corresponds to the target model and is allocated by the first network element;
   third model information, wherein the third model information comprises network structure information and/or model parameter information of the target model;
   second indication information, used to indicate that the target model is a horizontal federated learning model; and
   related information of a second network element and/or a third network element, wherein the second network element and/or the third network element are network elements participating in training of the target model.

35. The method according to claim 33, wherein the related information of the target model is transmitted by the first network element in a case that a calculation result of a loss function meets a predetermined requirement.

36. The method according to claim 34, wherein the method further comprises:
   transmitting, by the fourth network element, a model request message to the first network element, wherein the model request message comprises at least one of the following:

   type information of a model training task;
   identification information of the model training task;
   related information of a second filter, used to define at least one of a target object, target time, and a target area that correspond to the model training task; and
   model feedback-related information, wherein the model feedback-related information comprises at least one of a model description manner and feedback time.

37. A model training apparatus, comprising:

   a first transmitting module, configured to transmit a federated model training request message to at least one second network element in a case that a federated model training process corresponding to a model training task is performed, wherein the at least one second network element is a network element participating in the federated model training process, and samples corresponding to training data used by different second network elements for the federated model training process are different but have same sample features;
   a first receiving module, configured to receive first information transmitted by the at least one second network element, wherein the first information comprises at least a first training result, and the first training result corresponds to training data used by the second network element for the federated model training process; and
   a first model training module, configured to perform model training based on a first model and the first training result reported by the at least one second network element, to obtain a target model and/or a second training result.

38. A model training apparatus, comprising:

   a second receiving module, configured to receive, for a second network element, a federated model training request message transmitted by a first network element, wherein the federated model training request message is used to request the second network element to participate in a federated model training process corresponding to a model training task;
   a second model training module, configured to perform model training based on the federated model training request message to obtain a first training result; and
   a second transmitting module, configured to transmit first information to the first network element, wherein the first information comprises at least the first training result, wherein
   the first training result corresponds to training data used by the second network element for the federated model training process, a sample used by the second network element for the federated model training and a sample used by a fifth network element for the federated model training are different but have same sample features, and the fifth network element is a network element, other than the second network element, among a plurality of network elements participating in the federated model training process.

39. A model training apparatus, comprising:

   a third receiving module, configured to receive related information of a target model that is transmitted by a first network element, wherein

the related information of the target model is used to represent at least that the target model is a horizontal federated model.

**40.** A communications device, comprising a processor and a memory, wherein the memory stores a program or instructions executable on the processor, and when the program or instructions are executed by the processor, the steps of the model training method according to any one of claims 1 to 17 are implemented, or the steps of the model training method according to any one of claims 18 to 32 are implemented, or the steps of the model training method according to any one of claims 33 to 36 are implemented.

**41.** A readable storage medium, wherein the readable storage medium stores a program or instructions, and when the program or instructions are executed by a processor, the steps of the model training method according to any one of claims 1 to 17 are implemented, or the steps of the model training method according to any one of claims 18 to 32 are implemented, or the steps of the model training method according to any one of claims 33 to 36 are implemented.

FIG. 1

FIG. 2

EP 4 459 503 A1

300

S310

A first network element transmits a federated model training request message to at least one second network element when performing a federated model training process corresponding to a model training task

S320

The first network element receives first information transmitted by the at least one second network element

S330

The first network element performs model training based on a first model and a first training result reported by the at least one second network element, to obtain a target model and/or a second training result

FIG. 3

400

S410

A first network element transmits a federated model training request message to at least one second network element when performing a federated model training process corresponding to a model training task

S420

The first network element receives first information transmitted by the at least one second network element

S430

The first network element performs model training based on a first model and a first training result reported by the at least one second network element, to obtain a target model and/or a second training result

FIG. 4

33

500

S510

A first network element receives a model request message transmitted by a fourth network element

S520

The first network element transmits a federated model training request message to at least one second network element when performing a federated model training process corresponding to a model training task

S530

The first network element receives first information transmitted by the at least one second network element

S540

The first network element performs model training based on a first model and a first training result reported by the at least one second network element, to obtain a target model and/or a second training result

FIG. 5

FIG. 6a

FIG. 6b

700

S710

A second network element receives a federated model training request message transmitted by a first network element

S720

The second network element performs model training based on the federated model training request message to obtain a first training result

S730

The second network element transmits first information to the first network element

FIG. 7

800

S810

A fourth network element receives related information of a target model that is transmitted by a first network element

FIG. 8

900

First transmitting module — 910

First receiving module — 920

First model training module — 930

FIG. 9

1000

Second receiving module — 1010

Second model training module — 1020

Second transmitting module — 1030

FIG. 10

1100

1110

Third receiving module

FIG. 11

1200

Communications device

1201 Processor ⟺ Memory 1202

FIG. 12

1300

1301 ⌇ Radio frequency unit

Network module ⌇ 1302

1310

1309 ⌇ Memory
Application program
Operating system

Audio output unit ⌇ 1303

1304
Input unit
Graphics processing unit ⌇ 13041
Microphone ⌇ 13042

1308 ⌇ Interface unit

Processor

1307
User input unit
13071 ⌇ Touch panel
13072 ⌇ Other input devices

1306
Display unit
Display panel ⌇ 13061

Sensor ⌇ 1305

FIG. 13

1400

1401

1404 Processor

1402 Radio frequency apparatus

Bus interface

1403 Baseband apparatus

1405 Memory

Network interface

1406

FIG. 14

1500

Network-side device

1501 Processor

Bus interface

1502 Network interface

1503 Memory

FIG. 15

## INTERNATIONAL SEARCH REPORT

| International application No. |
| --- |
| **PCT/CN2022/143207** |

### A. CLASSIFICATION OF SUBJECT MATTER

G06N3/04(2023.01)i;G06N3/08(2023.01)i

According to International Patent Classification (IPC) or to both national classification and IPC

### B. FIELDS SEARCHED

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 联邦学习, 横向, 模型, 训练, 网元, 设备, 指示, 信息, federated learning, federal learning, horizontal, model, training, network element, device, indication, information

### C. DOCUMENTS CONSIDERED TO BE RELEVANT

| Category* | Citation of document, with indication, where appropriate, of the relevant passages | Relevant to claim No. |
| --- | --- | --- |
| X | CN 111538598 A (SHENZHEN QIANHAI WEBANK CO., LTD.) 14 August 2020 (2020-08-14)<br>  description, paragraphs [0064]-[0154] | 1-41 |
| X | CN 113839797 A (HUAWEI TECHNOLOGIES CO., LTD.) 24 December 2021 (2021-12-24)<br>  description, paragraphs [0070]-[0244] | 1-41 |
| A | CN 113807538 A (JDT HOLDINGS CO., LTD.) 17 December 2021 (2021-12-17)<br>  description, paragraphs [0056]-[0199] | 1-41 |
| A | CN 113159289 A (PING AN TECHNOLOGY (SHENZHEN) CO., LTD.) 23 July 2021 (2021-07-23)<br>  description, paragraphs [0037]-[0121] | 1-41 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 February 2023** | **16 March 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/143207**

| Patent document cited in search report | | | Publication date (day/month/year) | Patent family member(s) | | | Publication date (day/month/year) |
|---|---|---|---|---|---|---|---|
| CN | 111538598 | A | 14 August 2020 | WO | 2021219053 | A1 | 04 November 2021 |
| CN | 113839797 | A | 24 December 2021 | WO | 2021258986 | A1 | 30 December 2021 |
| CN | 113807538 | A | 17 December 2021 | WO | 2022213954 | A1 | 13 October 2022 |
| CN | 113159289 | A | 23 July 2021 | None | | | |

Form PCT/ISA/210 (patent family annex) (July 2022)

**EP 4 459 503 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111662860